(19) Europäisches Patentamt / European Patent Office / Office européen des brevets

(11) **EP 4 271 760 B1**

(12) **EUROPEAN PATENT SPECIFICATION**

(45) Date of publication and mention
of the grant of the patent:
**06.08.2025   Bulletin 2025/32**

(51) International Patent Classification (IPC):
*C09C 1/02* (2006.01)    *C09C 3/10* (2006.01)
*C01F 11/18* (2006.01)

(21) Application number: 21816465.5

(22) Date of filing: 29.11.2021

(52) Cooperative Patent Classification (CPC):
**C09C 1/021; C01F 11/184;** C01F 11/18;
C01P 2002/72; C01P 2002/86; C01P 2004/03;
C01P 2004/04; C01P 2004/32; C01P 2004/51;
C01P 2004/52; C01P 2004/62; C01P 2004/64;
C09C 3/10

(86) International application number:
**PCT/EP2021/083379**

(87) International publication number:
**WO 2022/144136 (07.07.2022 Gazette 2022/27)**

(54) **STABILISATION OF CARBONATE CALCIUM NANOPARTICLES**

STABILISIERUNG VON CARBONAT-CALCIUM-NANOPARTIKELN

STABILISATION DE NANOPARTICULES DE CARBONATE DE CALCIUM

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 30.12.2020  LU 102358

(43) Date of publication of application:
08.11.2023  Bulletin 2023/45

(73) Proprietor: Luxembourg Institute of Science and
Technology (LIST)
4362 Esch-sur-Alzette (LU)

(72) Inventors:
• CHUZEVILLE, Lauriane
4362 Esch-sur-Alzette (LU)
• THOMANN, Jean-Sébastien
4362 Esch-sur-Alzette (LU)

(74) Representative: **Patent 42**
5, rue Dicks
4081 Esch-zur-Alzette (LU)

(56) References cited:
WO-A1-2021/116041    CN-A- 106 752 100

• XIAO DOUXIN ET AL: "Metal-phenolic coated and
prochloraz-loaded calcium carbonate carriers
with pH responsiveness for environmentally-
safe fungicide delivery", CHEMICAL
ENGENEERING JOURNAL, vol. 418, 1 August
2021 (2021-08-01), AMSTERDAM, NL, pages
129274, XP055840102, ISSN: 1385-8947,
Retrieved from the Internet <URL:https://www.
sciencedirect.com/science/article/pii/
S1385894721008639/pdfft?
md5=35fc568af499c91b45bb32c1a77381d5&
pid=1-s2.0-S1385894721008639-main.pdf> DOI:
10.1016/j.cej.2021.129274

**Description**

**Field of the disclosure**

The present disclosure relates to core-shell nanoparticles of calcium carbonates, methods for forming such core-shell nanoparticles and uses of such core-shell nanoparticles.

**Background of the disclosure**

Calcium carbonate colloids are of great interest in various industrial fields due to their advantageous properties. Indeed, in the medical field, at acidic pH, they naturally decompose into carbon dioxide and calcium ions, which makes them pH-responsive materials for bioimplant, drug delivery purposes etc. In the composite field, they can be used as a reinforcing agent or thixotropic agent. In hygiene technology, they can be used as scrubbing materials or teeth cleaning materials.

For all of these applications, nano-size colloids are particularly suitable. Indeed, such a size allows the colloids to cross the biological barrier, increase surface area or induce better rheological properties. However, if not stabilized in water, amorphous calcium carbonate (ACC) nanoparticles are not stable which hampers their use, especially in the biological field.

Several strategies have been developed in the literature for the stabilisation of calcium carbonate nanoparticles. The use of a polymeric nanosphere as a matrix for the biomineralization of calcium carbonate is one of them. The limit of this strategy stands in the use of synthetic polymers. At present, there is no protocol using biopolymers as stabilisers of nanosize calcium carbonate nanoparticles. The second drawback of this technique is the obtention of a hybrid final material, which is often designed for one type of, and therefore hampers the versatility of the final object.

In the study of Boury F. et al., (Colloids and surfaces B: Biointerfaces, 2014, 123, 158-169) entitled "Synthesis and characterization of CaCO3 - Biopolymer hybrid nanoporous microparticles for controlled release of doxorubicin", it is reported a stabilization of calcium carbonate for biological application by the biopolymer carragenin, a linear sulfated polygalactans extracted from marine algae. These particles are used for the delivery of doxorubicin. Although a biopolymer is used for the stabilization in biological conditions, the drawback of this work is the size. Indeed, these carriers are microparticles.

In the study of Xu C. et al. (Adv. Funct. Mater., 2019, 1808146) entitled "Biodegradable Nanoparticles of Polyacrylic Acid (PAA)-Stabilized Amorphous CaCO3 for Tunable pH-Responsive Drug Delivery and Enhanced Tumor Inhibition", it is reported as a solution for stabilizing amorphous calcium carbonate nanoparticles in aqueous media, the synthesis of hybrid PAA-ACC NPs encapsulating doxorubicin, obtained by embedding and stabilizing calcium carbonate nuclei into a PAA nanosphere. Such ACC NPs with PAA are hybrid nanocarrier that can release the doxorubicin at a pH ranging between 5.6 and 7.4. It was found that by doping the layers with $Sr^{++}$ or $Mg^{++}$, it was possible to enable drug delivery at a higher pH, namely a pH ranging between 6.0 and 7.7, providing thus acid-resistant nanoparticles. However, the hybrid character of the material and the synthetic nature of PAA does not contribute to its biodegradability within the natural medium to which such nanocarrier is to be used.

In the study of Bala H. et al., entitled "Preparation and characteristics of calcium carbonate/silica nanoparticles with core-shell structure" (Colloids and Surfaces A: Physiochem. Eng. Aspects, 2007, 294, 8-13), nanoparticles with a core-shell structure were prepared. The core is composed of calcium carbonate and the shell of silica has been coated on the core. These particles show good stability in an environment presenting a pH of about 8.

In CN106752100, a morphology-controllable nano-calcium carbonate powder modified by a composite alkali lignin polyoxyethylene ether active agent is disclosed.

In WO2021/116041, a dry composition comprising $CaCO_3$ and at least one lignin is disclosed.

There is, therefore, a need to improve the stability, biocompatibility, biodegradability and processability (time of synthesis, use of environmentally-friendly components...) of core-shell nanoparticles of calcium carbonate, as well as their versatility.

**Summary of the disclosure**

According to a **first aspect,** the disclosure relates to the use of a polyphenol as described in appended claim 14.

For example, the disclosure relates to the use of a polyphenol as a shell of core-shell nanoparticle having a core being one or more selected from vaterite, proto-vaterite, and amorphous calcium carbonate as determined by X-Ray diffraction, wherein one or more of the following features define said polyphenol:

- said polyphenol is at least partially soluble in one or more polar solvents, preferably in one or more polar solvents miscible in water and having a boiling point inferior to 100°C under a pressure of 2 kPa, and/or

- said polyphenol is insoluble in water, and/or
- said polyphenol shows a pH ranging from 5 to 9 when measured in a solution of said one or more polar solvents and water at a concentration of 10 wt.% based on the total weight of said solution.

With preference, the first aspect of the disclosure relates to the use of a polyphenol as a shell of core-shell nanoparticle having a core being one or more selected from vaterite, proto-vaterite, and amorphous calcium carbonate as determined by X-Ray diffraction, said polyphenol is selected to be insoluble in water and to show a pH ranging from 5 to 9 when measured in a solution of one or more polar solvents and water at a concentration of 10 wt.% based on the total weight of said solution.

More preferably, the first aspect of the disclosure relates to the use of a polyphenol as a shell of core-shell nanoparticle having a core being one or more selected from vaterite, proto-vaterite, and amorphous calcium carbonate as determined by X-Ray diffraction, said polyphenol is selected to be insoluble in water, to show a pH ranging from 5 to 9 when measured in a solution of one or more polar solvents and water at a concentration of 10 wt.% based on the total weight of said solution and to be at least partially soluble in said one or more polar solvents.

It was found that by using a polyphenol which is not water-soluble and that does not generate a high level of acidity when present in a solution comprising water and a polar solvent in which the polyphenol is at least partially soluble, it was possible to stabilize calcium carbonate nanoparticles. The polyphenol thus surrounds the core of calcium carbonate and affords hydrophobic protection to the calcium carbonate nanoparticle which subsequently becomes stable in aqueous media or water. The protection of the calcium carbonate core is only possible when the acidity generated by the polyphenol is not too high, typically the pH of the aqueous solution in which the polyphenol is dissolved must be superior to 5. Similarly, the pH of the aqueous solution in which the polyphenol is dissolved must also be inferior to 9, since too high basicity would prevent the structuration into a core-shell arrangement.

According to a **second aspect,** the disclosure relates to a a core-shell nanoparticle as defined in appended independent claim 1 and appended dependent claims 2 to 9 thereof.

For example, the disclosure relates to a core-shell nanoparticle, the nanoparticle comprising a core being one or more selected from vaterite, proto-vaterite, and amorphous calcium carbonate as determined by X-Ray diffraction, **remarkable in that** the nanoparticle further comprises a shell of polyphenol, wherein one or more of the following features define said polyphenol

- said polyphenol is at least partially soluble in one or more polar solvents, preferably in one or more polar solvents miscible in water and having a boiling point inferior to 100°C under a pressure of 2 kPa, and/or
- said polyphenol insoluble in water, and/or
- said polyphenol shows a pH ranging from 5 to 9 when measured in a solution of said one or more polar solvents and water at a concentration of 10 wt.% based on the total weight of said solution.

With preference, the second aspect of the disclosure relates to a core-shell nanoparticle, the nanoparticle comprising a core being one or more selected from vaterite, proto-vaterite, and amorphous calcium carbonate as determined by X-Ray diffraction, **remarkable in that** the nanoparticle further comprises a shell of polyphenol, wherein said polyphenol is selected to be insoluble in water and to show a pH ranging from 5 to 9 when measured in a solution of one or more polar solvents and water at a concentration of 10 wt.% based on the total weight of said solution.

More preferably, the second aspect of the disclosure relates to a core-shell nanoparticle, the nanoparticle comprising a core being one or more selected from vaterite, proto-vaterite, and amorphous calcium carbonate as determined by X-Ray diffraction, **remarkable in that** the nanoparticle further comprises a shell of polyphenol, wherein said polyphenol is selected to be insoluble in water, to show a pH ranging from 5 to 9 when measured in a solution of one or more polar solvents and water at a concentration of 10 wt.% based on the total weight of said solution and to be at least partially soluble in said one or more polar solvents.

It was found that the core-shell structure of the nanoparticle provides an arrangement that confers stability to said nanoparticles in aqueous media or water. This further allows the implementation of several uses for the core-shell nanoparticle, as it will be described further on.

Whichever the first and/or the second aspect, all the following features apply:
Advantageously, the polyphenol which is insoluble in water and that shows a pH ranging from 5 to 9 when measured in a solution of one or more polar solvents and water at a concentration of 10 wt.% based on the total weight of said solution is also at least partially soluble in said one or more polar solvents, preferably in one or more polar solvents miscible in water and having a boiling point inferior to 100°C under a pressure of 2 kPa. For example, the polyphenol which is insoluble in water and that shows a pH ranging from 5 to 9 when measured in a solution of one or more polar solvents and water at a concentration of 10 wt.% based on the total weight of said solution is also totally soluble in said one or more polar solvents, preferably in one or more polar solvents miscible in water and having a boiling point inferior to 100°C under a pressure of 2 kPa.

With preference, said polyphenol shows a pH ranging from 5.5 to 8.5 when measured in a solution of one or more polar solvents and water at a concentration of 10 wt.% based on the total weight of said solution.

The fact that the polyphenol is insoluble in water means that the polyphenol has a concentration of at most 1 mg ml$^{-1}$ when in solution in water, preferably of at most 0.5 mg ml$^{-1}$, more preferably of at most 0.01 mg ml$^{-1}$, even more preferably of at most 0.001 mg ml$^{-1}$.

For example, the polyphenol is selected among one or more lignins that are insoluble in water and/or one or more phenol-formaldehyde resins with a formaldehyde to phenol molar ratio of less than one; with preference, the polyphenol is one or more lignins which are insoluble in water. The fact that the one or more lignins are insoluble in water means that the one or more lignins have a concentration of at most 1 mg ml$^{-1}$, preferably of at most 0.5 mg ml$^{-1}$, more preferably of at most 0.01 mg ml$^{-1}$, even more preferably of at most 0.001 mg ml$^{-1}$. For example, the polyphenol is one or more lignins which when in solution in water have a concentration of at most 1 mg ml$^{-1}$ and which do not comprise sulfo-lignin. With preference, said one or more lignins are one or more Kraft lignins.

For example, said polyphenol has an apparent $pK_0$ ranging between 8.0 and 13.0 as determined by UV-monitored OH-group titration at room temperature, preferably ranging between 8.5 and 12.8, more preferably ranging between 8.7 and 12.5.

The fact that said polyphenol is advantageously at least partially soluble in said one or more polar solvents, preferably in one or more polar solvents miscible in water and having a boiling point inferior to 100°C under a pressure of 2 kPa, means that said polyphenol has a solubility in said one or more polar solvents of at least 10% as determined by a solubility test A, namely ranging between 10% and 100% as determined by a solubility test A, or between 15% and 90%, or between 20% and 80%.

Advantageously, said one or more polar solvents are one or more polar solvents miscible in water and having a boiling point inferior to 100°C under a pressure of 2 kPa, and/or are one or more solvents selected from ethanol, methanol, isopropanol, acetonitrile, acetone, tetrahydrofuran, and dimethylsulfoxyde. With preference, said polar solvent is ethanol.

For example, said one or more polar solvents have an amount of water which is below 5 wt.% based on the total weight of said one or more polar solvents, preferably below 1 wt.%, more preferably below 0.5 wt.%, even more preferably below 0.2 wt.%, most preferably below 0.1 wt.% or said one or more polar solvents are free of water.

Advantageously, said polyphenol has a molecular weight ranging between 1000 g mol$^{-1}$ and 15000 g mol$^{-1}$ as determined by gel permeation chromatography, preferably between 2000 g mol$^{-1}$ and 14000 g mol$^{-1}$, more preferably between 3000 g mol$^{-1}$ and 13000 g mol$^{-1}$, even more preferably between 4000 g mol$^{-1}$ and 12000 g mol$^{-1}$.

With preference, said polyphenol has at least one glass-transition temperature which is ranging between 100°C and 170°C as determined by differential scanning calorimetry, preferably between 105°C and 165°C, more preferably between 110°C and 160°C.

For example, said polyphenol has phenol moieties, and at least a part of said phenol moieties has been functionalized with one phenol protecting group. With preference, said phenol protecting group is selected from one or more of ether, silyl ether, ester, carbonate, carbamate, phosphinate and sulfonate, more preferably said phenol protecting group is a silyl ether. For example, all the phenol moieties have been functionalized with one phenol protecting group.

For example, said polyphenol has catechol moieties, and at least a part of said catechol moieties has been functionalized with one catechol protecting group. With preference, said catechol protecting group is selected from one or more of cyclic acetal, ketal, and cyclic ester. For example, all the catechol moieties have been functionalized with one catechol protecting group.

One or more of the following features advantageously further define the core-shell nanoparticle of the present disclosure:

- The shell of the core-shell nanoparticle has a thickness ranging between 2 nm and 40 nm as determined by scanning transmission electron microscopy, preferably ranging between 5 nm and 20 nm, more preferably ranging between 10 nm and 15 nm.
- The core of the core-shell nanoparticles has a diameter ranging between 50 nm and 150 nm as determined by scanning transmission electron microscopy, preferably ranging between 60 nm and 140 nm, more preferably ranging between 70 nm and 130 nm.
- Said nanoparticle is spherical as determined by scanning transmission electron microscopy.
- Said nanoparticle has a diameter ranging between 80 nm and 200 nm as determined by scanning electron microscopy, preferably ranging between 100 nm and 170 nm, more preferably ranging between 110 nm and 150 nm.
- Said nanoparticle has a diameter ranging between 110 nm and 350 nm as determined by dynamic light scattering, preferably 130 nm and 330 nm, more preferably between 150 nm and 310 nm, even more preferably 170 nm and 300 nm.
- When dispersed in water or aqueous media, said nanoparticle is monodisperse.
- When dispersed in water or aqueous media, said nanoparticle has a polydispersity index ranging between 0.08 and 0.30 as determined by dynamic light scattering, preferably between 0.10 and 0.28.

- Said nanoparticle has a surface charge having a ζ-potential equal to or below 0 mV as determined by micro-electrophoretic light scattering technology, preferably below -5 mV, more preferably below -10 mV, even more preferably below -15 mV, most preferably below -20 mv, even most preferably below -25 mV.

According to a **third aspect,** the disclosure relates to a method for forming core-shell nanoparticle according to the second aspect, said method being as defined in appended independent claim 10 and appended dependent claims 11 to 13 thereof.

For example, the disclosure relates to a method for forming core-shell nanoparticle according to the second aspect, said method being remarkable in that it comprises the following steps

a) providing calcium carbonate nanoparticles, to form a core selected from one or more of vaterite, proto-vaterite, and amorphous calcium carbonate as determined by X-Ray diffraction;
b) dissolving at least one polyphenol in one or more polar solvents to form a solution of at least one polyphenol, wherein said at least one polyphenol is further defined by one or more selected from being at least partially soluble in said one or more polar solvents, and/or from being insoluble in water and/or from showing a pH ranging from 5 to 9 when measured in a solution of said one or more polar solvents and water at a concentration of 10 wt.% based on the total weight of said solution;
c) mixing said calcium carbonate nanoparticles provided in step (a) with said solution of at least one polyphenol formed in step (b) to form a mixture;
d) injecting said mixture in water to provide a solution of at least one core-shell nanoparticle as defined in the second aspect; and
e) optionally, recovering said one or more core-shell nanoparticles as defined in the second aspect.

With preference, the disclosure relates to a method for forming core-shell nanoparticle according to the second aspect, said method being remarkable in that it comprises the following steps

a) providing calcium carbonate nanoparticles, to form a core selected from one or more of vaterite, proto-vaterite, and amorphous calcium carbonate as determined by X-Ray diffraction;
b) dissolving at least one polyphenol in one or more polar solvents to form a solution of at least one polyphenol, wherein said at least one polyphenol is further defined by one or more selected from being at least partially soluble in said one or more polar solvents, from being insoluble in water and from showing a pH ranging from 5 to 9 when measured in a solution of said one or more polar solvents and water at a concentration of 10 wt.% based on the total weight of said solution;
c) mixing said calcium carbonate nanoparticles provided in step (a) with said solution of at least one polyphenol formed in step (b) to form a mixture;
d) injecting said mixture in water to provide a solution of at least one core-shell nanoparticle as defined in the second aspect; and
e) optionally, recovering said one or more core-shell nanoparticles as defined in the second aspect.

With preference, the third aspect of the disclosure relates to a method for forming core-shell nanoparticles according to the second aspect, said method being remarkable in that it comprises the following steps:

a) providing calcium carbonate nanoparticles, to form a core selected from one or more of vaterite, proto-vaterite, and amorphous calcium carbonate as determined by X-Ray diffraction;
b) dissolving at least one polyphenol in one or more polar solvents to form a solution of at least one polyphenol, wherein said at least one polyphenol is insoluble in water and shows a pH ranging from 5 to 9 when measured in a solution of said one or more polar solvents and water at a concentration of 10 wt.% based on the total weight of said solution;
c) mixing said calcium carbonate nanoparticles provided in step (a) with said solution of at least one polyphenol formed in step (b) to form a mixture;
d) injecting said mixture in water to provide a solution of at least one core-shell nanoparticle as defined in the second aspect; and

optionally, recovering said one or more core-shell nanoparticles as defined in the second aspect

The method for forming the core-shell nanoparticle is time- and cost-efficient, which enlarges the fields of use of said nanoparticle by reducing the stabilization cost of the material, compared to lipid stabilization of calcium carbonate nanoparticles. The process is also environmentally-friendly, although this advantage can be further put forward by using naturally occurring polyphenol.

In addition to the features of the first and/or of the second aspect which also applies to the third aspect, the following features can also be applied to the first, second and/or third aspect.

With preference, step (d) is performed under stirring.

Advantageously, said one or more polar solvents are one or more polar solvents miscible in water and having a boiling point inferior to 100°C under a pressure of 2 kPa. For example, said one or more polar solvents are one or more solvents selected from ethanol, methanol, isopropanol, acetonitrile, acetone, tetrahydrofuran, and dimethylsulfoxide; with preference said polar solvent is ethanol.

For example, said one or more polar solvents have an amount of water which is below 5 wt.% based on the total weight of said one or more polar solvents, preferably below 1 wt.%, more preferably below 0.5 wt.%, even more preferably below 0.2 wt.%, most preferably below 0.1 wt.% or said one or more polar solvents are free of water.

For example, the volume ratio between the water and the mixture formed in step (c) is ranging between 5 and 15, preferably between 7 and 13.

For example, the weight ratio between the at least one polyphenol and calcium carbonate of the calcium carbonate nanoparticles is ranging between 0.01 and 1, preferably between 0.05 and 0.8, more preferably between 0.1 and 0.6.

For example, step (a) of providing calcium carbonate nanoparticles comprises the following sub-steps:

 i. providing calcium chloride;
 ii. dissolving said calcium chloride into ethanol to form an ethanolic solution of calcium chloride;
 iii. providing a carbonate salt;
 iv. placing the ethanolic solution of formed at sub-step (ii) in a first container and the bicarbonate salt provided at sub-step (iii) in at least one second container inside a reaction chamber, preferably a desiccator;
 v. decreasing the pressure within said reaction chamber
 vi. sealing the reaction chamber under reduced pressure to form an ethanolic suspension of calcium carbonate nanoparticles;
 vii. ageing said ethanolic suspension of calcium carbonate nanoparticles at reduced pressure: and
 viii. recovering said ethanolic suspension of calcium carbonate nanoparticles.

Advantageously, the reaction chamber does not comprise a desiccant.

With preference, the reaction chamber comprises a diffusion barrier. For example, the concentration of calcium chloride into ethanol is ranging between 0.25 g/L and 8.0 g/L, preferably between 2.0 g/L and 6.0 g/L.

According to a **fourth aspect,** the disclosure relates to the use of core-shell nanoparticle as defined in the second aspect, and as definied in appended independent claim 15.

For example, the disclosure relates to the use of core-shell nanoparticle as defined in the second aspect as a buffering agent in cancer therapy, or as a drug carrier, or as a contrast agent, or as a template for hollow nanoparticles, or as a whitening agent, or as an absorbent of perspiration, or as an absorbent of moisture, or as a substitute of colloidal plastic in scrubbing agent.

For example, the disclosure relates to the use of core-shell nanoparticles produced according to the third aspect as a buffering agent in cancer therapy, or as a drug carrier, or as a contrast agent, or as a template for hollow nanoparticles, or as a whitening agent, or as an absorbent of perspiration, or as an absorbent of moisture, or as a substitute of colloidal plastic in scrubbing agent.

**Description of the figures**

- Figure 1: Influence of the presence of at least one desiccant in the reaction chamber.
- Figure 2: Amorphous calcium carbonate nanoparticles growth curves, with and without diffusion barrier.
- Figure 3: Influence of the initial concentration of $CaCl_2$.
- Figure 4: XRD spectrum of amorphous calcium carbonate nanoparticles.
- Figure 5: SEM image of the amorphous calcium carbonate nanoparticles.
- Figure 6: TEM image of the amorphous calcium carbonate nanoparticles.
- Figure 7: Size distribution analysis by DLS of amorphous calcium carbonate nanoparticles dissolved in ethanol.
- Figure 8: SEM image of the amorphous calcium carbonate nanoparticles in an aqueous medium.
- Figure 9: Size distribution analysis by DLS of amorphous calcium carbonate nanoparticles in water.
- Figure 10: SEM image of core-shell nanoparticles with a core of calcium carbonate and a shell of Kraft lignin from Sigma-Aldrich.
- Figure 11: STEM image of several core-shell nanoparticles with a core of calcium carbonate and a shell of Kraft lignin from Sigma-Aldrich.

- Figure 12: STEM image of one core-shell nanoparticle with a core of calcium carbonate and a shell of Kraft lignin from Sigma-Aldrich.
- Figure 13: DLS spectra (three measurements were taken every 30 seconds) of core-shell nanoparticles with a core of calcium carbonate and a shell of Kraft lignin from Sigma-Aldrich.
- Figure 14: DLS spectra (three measurements were taken every 30 seconds) of Kraft lignin from Sigma-Aldrich.
- Figure 15: DLS spectra (three measurements were taken every 30 seconds) of core-shell nanoparticles with a core of calcium carbonate and a shell of an acidic Kraft lignin from Biopiva.
- Figure 16: DLS spectra (three measurements were taken every 30 seconds) of an acidic Kraft lignin from Biopiva.
- Figure 17: DLS spectra (two measurements were taken on day 1 and day 9) showing the stability of core-shell nanoparticles with a core of calcium carbonate and a shell of Kraft lignin from Sigman-Aldrich.
- Figure 18: Ratio of aliphatic OH groups over phenolic OH groups in the lignins as determined by $^{31}$P NMR.

**Detailed description of the disclosure**

For the disclosure, the following definitions are given:

The expression "insoluble in a liquid or a solvent" means that 0.1 g of the compound in question is dissolved in said liquid or said solvent when there is at least 100 ml of said liquid or said solvent. In other words, the concentration of the compound in question in said liquid or said solvent is less or equal to 1 mg/ml.

The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

The recitation of numerical ranges by endpoints includes all integer numbers and, where appropriate, fractions subsumed within that range (e.g. 1 to 5 can include 1, 2, 3, 4, 5 when referring to, for example, a number of elements, and can also include 1.5, 2, 2.75 and 3.80, when referring to, for example, measurements). The recitation of endpoints also includes the recited endpoint values themselves (e.g. from 1.0 to 5.0 includes both 1.0 and 5.0). Any numerical range recited herein is intended to include all sub-ranges subsumed therein.

The particular features, structures, characteristics or embodiments may be combined in any suitable manner, as would be apparent to a person skilled in the art from this disclosure, in one or more embodiments.

Use of a polyphenol as a shell of core-shell nanoparticle with a core of calcium carbonate

The disclosure relates to the use of a polyphenol as a shell of core-shell nanoparticle having a core being one or more selected from vaterite, proto-vaterite, and amorphous calcium carbonate as determined by X-Ray diffraction, wherein said polyphenol is selected to be insoluble in water and to show a pH ranging from 5 to 9 when measured in a solution of one or more polar solvents and water at a concentration of 10 wt.% based on the total weight of said solution.

More particularly, the disclosure relates to the use of a polyphenol as a shell of core-shell nanoparticle having a core being one or more selected from vaterite, proto-vaterite, and amorphous calcium carbonate as determined by X-Ray diffraction, wherein said polyphenol is selected to be insoluble in water, to show a pH ranging from 5 to 9 when measured in a solution of one or more polar solvents and water at a concentration of 10 wt.% based on the total weight of said solution and to be at least partially soluble in said one or more polar solvents.

Core-shell nanoparticles with a core of calcium carbonate

The disclosure also relates to core-shell nanoparticle, the nanoparticle comprising a core being one or more selected from vaterite, proto-vaterite, and amorphous calcium carbonate as determined by X-Ray diffraction, remarkable in that the nanoparticle further comprises a shell of polyphenol, wherein said polyphenol is selected to be insoluble in water, to show a pH ranging from 5 to 9 when measured in a solution of one or more polar solvents and water at a concentration of 10 wt.% based on the total weight of said solution and to be at least partially soluble in said one or more polar solvents.

With preference, said polyphenol, when in a solution of one or more polar solvents and water at a concentration of 10 wt.% based on the total weight of said solution, provides a pH of said solution ranging between 6 and 8. That means that the polyphenol which is selected to make the shell of the core-shell nanoparticle, in addition, to being insoluble in water must also generate, when dissolved in an aqueous solution of said polar solvents, a weak acidity, at least superior to 5. This is to prevent the dissolution of the calcium carbonate core of the core-shell nanoparticle and subsequently, to enhance the stabilization of said core-shell nanoparticle. Any polyphenol which would generate an acidic solution, namely with a pH being inferior to 5, would harm the structuration of the core of the core-shell nanoparticle. Similarly, the pH of the aqueous solution in which the polyphenol is dissolved must also be inferior to 9, since too high basicity of the solution would prevent the structuration into a core-shell arrangement. Indeed, at elevated pH, the polyphenol can spontaneously nucleate and can become soluble in water, especially when the polyphenol has a low molecular weight.

The fact that the polyphenol is insoluble in water means that the polyphenol has a concentration of at most 1 mg ml$^{-1}$ when in solution in water, preferably of at most 0.5 mg ml$^{-1}$, more preferably of at most 0.01 mg ml$^{-1}$, even more preferably of at most 0.001 mg ml$^{-1}$.

For example, the polyphenol is selected among one or more lignins that are insoluble in water and/or one or more phenol-formaldehyde resins with a formaldehyde to phenol molar ratio of less than one. Phenol-formaldehyde resins with a formaldehyde to phenol molar ratio of less than one are known as novolac resins. Novolac resins are thermoplastic, meaning that they melt with an application of heat but do not cross-link. With preference, polyphenol is one or more lignins that are insoluble in water. For example, said polyphenol has an apparent $pK_0$ ranging between 8.0 and 13.0 as determined by UV-monitored OH-group titration at room temperature, preferably ranging between 8.5 and 12.8, more preferably ranging between 8.7 and 12.5.

The fact that the one or more lignins are insoluble in water means that the one or more lignins have a concentration of at most 1 mg ml$^{-1}$, preferably of at most 0.5 mg ml$^{-1}$, more preferably of at most 0.01 mg ml$^{-1}$, even more preferably of at most 0.001 mg ml$^{-1}$. For example, the polyphenol is one or more lignins which when in solution in water have a concentration of at most 1 mg ml$^{-1}$ and which do not comprise a sulfo-lignin, since sulfo-lignin is a water-soluble lignin. As lignins are considered as natural thermoplastic compounds (while novolacs are synthetic materials), the use of one or more lignins can be considered as a major improvement in the stabilization of the calcium carbonate nanoparticles since it becomes indeed possible to provide core-shell nanoparticles using bioavailable materials.

Advantageously, the polyphenol which is insoluble in water and that shows a pH ranging from 5 to 9 when measured in a solution of said one or more polar solvents and water at a concentration of 10 wt.% based on the total weight of said solution is also at least partially soluble in one or more polar solvents, preferably in one or more polar solvents miscible in water and having a boiling point inferior to 100°C under a pressure of 2 kPa. Thus, the one or more polar solvents are easily evaporable. For example, the polyphenol which is insoluble in water and that shows a pH ranging from 5 to 9 when measured in a solution of one or more polar solvents and water at a concentration of 10 wt.% based on the total weight of said solution is also totally soluble in one or more polar solvents, preferably in one or more polar solvents miscible in water and having a boiling point inferior to 100°C under a pressure of 2 kPa. The fact that said polyphenol is at least partially soluble in one or more polar solvents means that said polyphenol has a solubility in said one or more polar solvents of at least 10% as determined by a solubility test A, namely ranging between 10% and 100% as determined by a solubility test A, or between 12% and 95%, or between 13% and 90%. The solubility can also range between 15% and 85% as determined by the solubility test A, or between 20% and 80%, or between 25% and 75%. More preferably, said polyphenol has a solubility in said one or more polar solvents of at least 12 % as determined by a solubility test A, even more preferably of at least 13%, most preferably of at least 15%, or of at least 20%, or of at least 25%. For example, said one or more polar solvents are one or more solvents selected from ethanol, methanol, isopropanol, acetonitrile, acetone, tetrahydrofuran, and dimethylsulfoxide; with preference, said polar solvent is ethanol.

The solubility is thus measured according to the solubility test A, which comprises the following method:

1) taking a weight of test sample ($w_{test\ sample}$) of approximately 5.0 g of polyphenol, this weight being preferably expressed as dry weight;

2) dispersing this weight in 200 ml of said one or more polar solvents, such as ethanol, at 22° C in an Erlenmeyer flask, which is subsequently placed at 22°C in a water bath for 4 hours under magnetic stirring with stirring for 5 minutes every 30 minutes;

3) filtering the contents of the flask through a filter with a porosity of 8 $\mu$m, for example of Whatman$^\circledR$ 2 V type;

4) pipetting 50 ml of filtrate and introducing this amount into a dry and tared crystallizing dish; evaporating said one or more polar solvents, such as ethanol, from the crystallizing dish by heating at 60° C for 45 minutes and then at 130° C for 90 minutes;

5) after cooling in a desiccator, weighing the weight of polyphenol obtained after drying ($w_{solids}$ extract) .

The solubility is calculated in the following way:

$$Solubility = [w_{solids\ extract} \times 200 \times 100]/[50 \times w_{test\ sample}]$$

For example, said one or more polar solvents have an amount of water which is below 5 wt.% based on the total weight of said one or more polar solvents, preferably below 1 wt.%, more preferably below 0.5 wt.%, even more preferably below 0.2 wt.%, most preferably below 0.1 wt.% or said one or more polar solvents are free of water.

Advantageously, said polyphenol has a molecular weight ranging between 1000 g mol$^{-1}$ and 15000 g mol$^{-1}$ as determined by gel permeation chromatography, preferably between 2000 g mol$^{-1}$ and 14000 g mol$^{-1}$, more preferably between 3000 g mol$^{-1}$ and 13000 g mol$^{-1}$, even more preferably between 4000 g mol$^{-1}$ and 12000 g mol$^{-1}$. For example,

when the polyphenol has a low molecular weight, namely a molecular weight below 4000 g mol$^{-1}$ as determined by gel permeation chromatography, or below 3000 g mol$^{-1}$, or below 2000 g mol$^{-1}$, or below 1500 g mol$^{-1}$, the polyphenol is not large enough to provide an efficient stabilisation as a shell to the core of calcium carbonate. Also, when the polyphenol has a high molecular weight, namely a molecular weight superior to 12000 g mol$^{-1}$ as determined by gel permeation chromatography, or superior to 13000 g mol$^{-1}$, or superior to 14000 g mol$^{-1}$, or superior to 14500 g mol$^{-1}$, the solubility of the polyphenol into said one or more polar solvents is decreasing.

With preference, said polyphenol has at least one glass-transition temperature which is ranging between 100°C and 170°C as determined by differential scanning calorimetry, preferably between 105°C and 165°C, more preferably between 110°C and 160°C. For example, said polyphenol has a glass transition temperature of a least 140°C as determined by differential scanning calorimetry, preferably of at least 150°C, and an additional glass transition temperature comprised between 100°C and 135°C as determined by differential scanning calorimetry, preferably between 110°C and 130°C.

It is known that polyphenol comprises phenol and catechol moieties. For example, at least a part of said phenol moieties has been functionalized with one phenol protecting group and/or at least of a part of said catechol moieties has been functionalized with one catechol protecting group. Reference is hereby made to Chapter 3 of the book entitled "Protection for phenols and catechols", published online on 11 August 2014 (Wiley online library) (Online ISBN: 9781118905074). With preference, said phenol protecting group is selected from one or more of ether, silyl ether, ester, carbonate, carbamate, phosphinate and sulfonate. One example of a phenol protecting group is the trimethylsilyl ether (TMS). For example, all the phenol moieties have been functionalized with one phenol protecting group. With preference, said catechol protecting group is selected from one or more of cyclic acetal, ketal, and cyclic ester. For example, all the catechol moieties have been functionalized with one catechol protecting group.

Method for forming one or more core-shell nanoparticles with a core of calcium carbonate as described above

Crystalline calcium carbonate, in the form of vaterite ($\mu$-CaCO$_3$) or proto-vaterite, can be used to prepare the CC nanoparticles. Alternatively, the core of the calcium carbonate nanoparticles can be amorphous.

In this regard, it is understood that any amorphous calcium carbonate nanoparticles, or vaterite nanoparticles, or proto-vaterite nanoparticles can be used to prepare the core-shell nanoparticles as described above. However, to control the size distribution of the core-shell nanoparticles, it is preferred to prepare the calcium carbonate nanoparticles. The calcium carbonate nanoparticles can be for example formed via an ethanol-ammonia diffusion method, as follows:

i. providing calcium chloride (such as CaCl$_2$.6H$_2$O or CaCl$_2$.2H$_2$O);
ii. dissolving said calcium chloride into ethanol to form an ethanolic solution of calcium chloride; preferably using mechanical or magnetic stirring, more preferably using magnetic stirring;
iii. providing a carbonate salt, preferably ammonium carbonate - (NH$_4$)$_2$CO$_3$ - or ammonium bicarbonate - NH$_4$HCO$_3$ -;
iv. placing the ethanolic solution of formed at sub-step (ii) in a first container and the carbonate salt provided at sub-step (iii) in at least one second container inside a reaction chamber, preferably a desiccator;
v. decreasing the pressure within said reaction chamber;
vi. sealing the reaction chamber under reduced pressure to form an ethanolic suspension of calcium carbonate nanoparticles;
vii. ageing said ethanolic suspension of calcium carbonate nanoparticles at reduced pressure: and
viii. recovering said ethanolic suspension of calcium carbonate nanoparticles.

With preference, ethanol is absolute ethanol and/or step (v) is performed with a vacuum pump.

The reaction chamber can be operated at a temperature ranging between 10°C and 50°C, preferably at room temperature (about 20°C).

With preference, the first container is covered by a sealing membrane having one or more holes. For example, the sealing membrane is Parafilm punctured with one or more holes.

Advantageously, the concentration of calcium chloride into ethanol is ranging between 0.25 g/L and 8.0 g/L, preferably between 1.0 g/L and 7.0 g/L, more preferably between 2.0 g/L and 6.0 g/L. The ethanolic solution of calcium chloride is placed inside the reaction chamber and within a first container. Within said ranges, it was observed that the calcium carbonate nanoparticles present a narrower size distribution and a smaller mean diameter. When these ranges are considered, the amount of the bicarbonate salt is ranging for example between 0.4 g and 400 g, preferably between 4 g and 40 g. With preference, the total amount of the bicarbonate salt is divided equally and placed into 1 to 10 second containers, different from the first container comprising the ethanolic solution of calcium chloride, preferably into 2 to 8 containers, more preferably into 3 to 6 containers. The one or more second containers have an opening to allow the diffusion of the bicarbonate salt. Advantageously, the size of the opening is ranging between 0.5 cm and 5 cm, preferably between 1 cm and 3 cm. A sealing membrane having small holes can be placed on the one or more second containers, preferably, the second containers are not covered with a sealing membrane having small holes.

For example, step (v) of decreasing the pressure is the step of reaching a vacuum ranging between 1 kPa and 800 kPa, preferably between 60 kPa and 700 kPa, more preferably between 200 and 500 kPa. For example, the step (vi) of ageing the ethanolic suspension of calcium carbonate nanoparticles at reduced pressure lasts between 5 hours and 80 hours, preferably between 12 hours and 48 hours.

For example, step (vi) comprises a step of centrifugation of the ethanolic suspension; with preference, the step of centrifugation is performed with a relative centrifugal force ranging between 20,000 g and 45,000 g, preferably between 25,000 g and 40,000 g, and/or for a time ranging between 1 minute and 1 hour, preferably between 5 minutes and 20 minutes. After the step of centrifugation, the obtained supernatant is discarded and the obtained pellet is dispersed in ethanol, preferably in an amount of ethanol ranging between 1 mL and 100 mL. Said dispersion in ethanol is further centrifugated, preferably with a relative centrifugal force ranging between 2,000 g and 10,000 g, more preferably between 3,500 g and 5,000 g; and/or for a time ranging between 1 minute and 1 hour, preferably between 5 and 20 minutes. The pellet is discarded and the supernatant is recovered since it comprises amorphous calcium carbonate nanoparticles in suspension in ethanol. They can be stored in a fridge, for example at 4°C.

The reaction chamber can contain a desiccant. However, advantageously, the reaction chamber does not comprise any desiccant. The desiccant could be placed in the reaction chamber to trap water molecules generated by the decomposition of the bicarbonate salt.

The diffusion area surface (S) corresponding to the surface of the first container opening (i.e. the surface of the calcium chloride ethanolic solution), and z corresponding to the height of that said calcium chloride solution in the first container, with preference, the ratio S/z is ranging between 5 and 30, more preferably between 10 and 20, even more preferably between 12 and 18.

This ratio influences the final calcium carbonate nanoparticles size, as the formation of calcium carbonate nanoparticles relies on the gas (i.e. gas coming from the decomposition of ammonium carbonate or bicarbonate) diffusion from the reaction chamber atmosphere to the solution of calcium chloride. Said gas diffusion is a function of the first Fick's law (1), which estimates the gas flux through the gas-liquid interface (J) using the gas diffusion coefficient in the liquid (D), the diffusion area surface (S), the gas concentration (C) and the height of the solution in the first container (z) according to equation (1).

$$J = D \ x \ S \ x \ \frac{\partial c}{\partial z} \qquad (1)$$

Further information about the formation of the calcium carbonate nanoparticles via the ethanol-ammonia diffusion can be found in the studies of Chen S-F. et al. (Chem. Comm., 2013, 49, 9564-9566), entitled "Ethanol assisted synthesis of pure and stable amorphous calcium carbonate nanoparticles" and/or of Som A. et al. (Nanoscale, 2016, 8, 12639-12674). This ethanol-ammonia diffusion method presents the advantage of preventing the crystallization of the amorphous calcium carbonate nanoparticles into crystalline calcium carbonate polymorphs and is achieved without additives.

In an aspect of the present disclosure, a method for forming core-shell nanoparticles with a core of calcium carbonate is described. Said method comprises the following steps

> a) providing calcium carbonate nanoparticles, to form a core selected from one or more of vaterite, proto-vaterite, and amorphous calcium carbonate as determined by X-Ray diffraction;
> b) dissolving at least one polyphenol in one or more polar solvents, preferably in one or more polar solvents miscible in water and having a boiling point inferior to 100°C under a pressure of 2 kPa, to form a solution of at least one polyphenol, further wherein said at least one polyphenol is insoluble in water and shows a pH ranging from 5 to 9 when measured in a solution of said one or more polar solvents and water at a concentration of 10 wt.% based on the total weight of said solution;
> c) mixing said calcium carbonate nanoparticles provided in step (a) with said solution of at least one polyphenol formed in step (b) to form a mixture;
> d) injecting said mixture in water to provide a solution of core-shell nanoparticles with a core of calcium carbonate; and
> e) optionally, recovering said core-shell nanoparticles with a core of calcium carbonate.

With preference, step (d) is performed under stirring.

Advantageously, said at least one polyphenol is at least partially soluble in said one or more polar solvents.

It is preferred that the disclosure relates to a method for forming core-shell nanoparticle with a core of calcium carbonate and that said method is remarkable in that it comprises the following steps

> a) providing calcium carbonate nanoparticles, to form a core selected from one or more of vaterite, proto-vaterite, and amorphous calcium carbonate as determined by X-Ray diffraction;
b) dissolving at least one polyphenol in one or more polar solvents to form a solution of at least one polyphenol, wherein said at least one polyphenol is further defined by one or more selected from being at least partially soluble in said one or more polar solvents, from being insoluble in water and from showing a pH ranging from 5 to 9 when measured in a solution of said one or more polar solvents and water at a concentration of 10 wt.% based on the total weight of said solution;
c) mixing said calcium carbonate nanoparticles provided in step (a) with said solution of at least one polyphenol formed in step (b) to form a mixture;
d) injecting said mixture in water to provide a solution of at least one core-shell nanoparticle as defined in the second aspect; and
e) optionally, recovering said one or more core-shell nanoparticles as defined in the second aspect.

More particularly, said method comprises the following steps:

a) providing calcium carbonate nanoparticles, to form a core selected from one or more of vaterite, proto-vaterite and amorphous calcium carbonate as determined by X-Ray diffraction;
b) dissolving at least one polyphenol in ethanol, to form an ethanolic solution of at least one polyphenol; further wherein said at least one polyphenol is at least partially soluble in ethanol, is insoluble in water and shows a pH ranging from 5 to 9 when measured in a solution of ethanol and water at a concentration of 10 wt.% based on the total weight of said solution;
c) mixing said calcium carbonate nanoparticles provided in step (a) with said ethanolic solution of at least one polyphenol formed in step (b) to form a mixture;
d) injecting said mixture in water to provide a solution of core-shell nanoparticles with a core of calcium carbonate; and
e) optionally, recovering said core-shell nanoparticles with a core of calcium carbonate.

With preference, step (d) is performed under stirring.
With preference, the calcium carbonate nanoparticles provided in step (a) are prepared via the ethanol-diffusion method exemplified above.
With preference, step (b) of dissolving at least one polyphenol in ethanol is performed by mechanical, ultrasonic or magnetic stirring, more preferably by ultrasonic stirring. When ultrasonic stirring is performed, an ultrasonic bath is used.
Water is preferably ultra-pure water.
It is preferred that the volume ratio between the water and the mixture of calcium carbonate nanoparticles with at least one polyphenol in ethanol is ranging between 5 and 15, preferably between 7 and 13.
The concentration of the one or more polyphenol in ethanol is advantageously ranging between 0.001 g/L and 0.5 g/L, preferably between 0.01 g/L and 0.4 g/L.
It is preferred that the weight ratio between the at least one polyphenol and calcium carbonate of the calcium carbonate nanoparticles is ranging between 0.01 and 1, preferably between 0.05 and 0.80, more preferably between 0.10 and 0.70, even more preferably between 0.20 and 0.50.
With preference, the step (d) of injecting is performed with a pipette, more preferably with an automatic pipette; and/or under stirring, more preferably under mechanical or magnetic stirring.
For example, the step (d) of injected is performed with strong pipetting consisting of several aspiration cycles, followed by 1 second to 1 min of a vortex.
For example, the polyphenol is selected among one or more lignins which are insoluble in water and/or one or more phenol-formaldehyde resins with a formaldehyde to phenol molar ratio of less than one; with preference, the polyphenol is one or more lignins which are insoluble in water.
The resulting core-shell nanoparticles with a core of calcium carbonate are spherical nanoparticles as determined by scanning transmission electron microscopy. The diameter of the core of calcium carbonate of the core-shell nanoparticles with a shell of polyphenol according to the disclosure is ranging between 50 nm and 150 nm as determined by scanning transmission electron microscopy, preferably ranging between 60 nm and 140 nm, more preferably ranging between 70 nm and 130 nm. The shell of polyphenol has a thickness ranging between 2 nm and 40 nm as determined by scanning transmission electron microscopy, preferably ranging between 5 nm and 20 nm, more preferably ranging between 10 nm and 15 nm. Using SEM methodology, the shell could not be observed. However, the diameter of the nanoparticles was measured as ranging between 80 nm and 200 nm as determined by scanning electron microscopy, preferably ranging between 100 nm and 170 nm, more preferably ranging between 110 nm and 150 nm. Using DLS, the diameter of the nanoparticles was measured by taking into account the hydrodynamic radius of the nanoparticles due to the presence of water. The diameter measured by dynamic light scattering is, therefore, bigger than the diameter measured by STEM or SEM. Subsequently, the diameter was ranging between 110 nm and 350 nm as determined by dynamic light scattering, preferably 130 nm and 330 nm, more preferably between 150 nm and 310 nm, even more preferably 170 nm and 300 nm.

The resulting core-shell nanoparticles can be stored in the fridge (for example at 4°C) in water or aqueous media.

When dispersed in water or aqueous media, said core-shell nanoparticles are monodisperse as determined by DLS and/or said core-shell nanoparticles have a polydispersity index (PDI) ranging between 0.08 and 0.300 as determined by dynamic light scattering, preferably between 0.10 and 0.280. For example, the PDI of said core-shell nanoparticles when dispersed in water or aqueous media is lower than 0.30 as determined by DLS, preferably lower than 0.25, more preferably lower than 0.20, even more preferably lower than 0.15 or lower than 0.10.

The fact that shell of the core-shell nanoparticles is a shell of polyphenol as defined as in the present disclosure, in particular a lignin which is insoluble into water, the surface charge of the core-shell nanoparticles of the present disclosure is neutral or negative, namely having a $\zeta$-potential below or equal to 0 mV as determined by micro-electrophoretic light scattering technology, preferably below or equal to -5 mV, more preferably below or equal to -10 mV, even more preferably below or equal to -15 mV, most preferably below or equal to -20 mv, even most preferably below or equal to -25 mV.

Use of core-shell nanoparticles with a core of calcium carbonate

The core-shell nanoparticles of the present disclosure can be used as a buffering agent, or as a drug carrier, or as a contrast agent or as a template for core-shell nanoparticles, or as a template for hollow nanoparticles, or as a whitening agent, or as an absorbent of perspiration, or as an absorbent of moisture, or as a substitute of colloidal plastic in scrubbing agent.

**Buffering agent:**

The dissolution of calcium carbonate nanoparticles *in vivo* at tumor site increases pH asymptotically to 7.4 as described in the work of A. Som et al., entitled "Monodispersed calcium carbonate nanoparticles modulate local pH and inhibit tumor growth in vivo" (Nanoscale, 2016, 8, 12639-12647). This study shows that calcium carbonate nanoparticles at slightly acidic pH conditions (6.2), like the pH conditions of some tumours microenvironment, dissolve and increase the pH progressively to 7.4, resulting in an inhibition of the tumour growth. According to the study, a size range around 100 nm would be optimal for this application.

Calcium carbonate nanoparticles dissolve in acidic pH, from 0 to 6.8, with different kinetics according to the pH. The core-shell nanoparticles with a core of calcium carbonate of the present disclosure share these properties.

**Drug carrier:**

Hydrophobic or hydrophilic drugs can be carried with calcium carbonate nanoparticles. An example of a hydrophilic drug is doxorubicin, as shown in the paper of Wang C., *et al.* (cf. *supra*). The core-shell nanoparticles with a core of calcium carbonate of the present disclosure are suitable for these applications.

**Contrast agent:**

The calcium carbonate nanoparticles can be used as a contrast agent, preferably as an ultrasound contrast agent. This has potential application in medical imaging, notably in tumor detection. Indeed, as it is described in the study of Min K. H. et al. (ACS Nano, 2015, 9, 134-145) entitled "pH-Controlled Gas-Generating Mineralized Nanoparticles: A Theranostic Agent for Ultrasound Imaging and Therapy of Cancers*",* the release of carbon dioxide is an intrinsic property of amorphous calcium carbonate nanoparticles. The generation of $CO_2$ happens during the dissolution of calcium carbonate in acidic conditions (pH 0 to 6.8). Therefore, the generation of a bubble of $CO_2$, potentially in combination with the action of dyes encapsulated within the core of the nanoparticles, allows the use of the core-shell nanoparticles with a core of calcium carbonate of the disclosure as a contrast agent. The potential encapsulated dyes can be one or more of calcein, rhodamine, methylene blue and indocyanine green, preferably indocyanine green.

**Whitening agent**

$TiO_2$ is usually used as a main white pigment but is relatively expensive. The cheaper calcium carbonate can be used as a substitute for $TiO_2$ in paint mixtures (see for example the study of Hassas B. V. et al. entitled "Substitution of TiO2 with precipitated calcium carbonate in waterborne paints" (DOI 10.13140/2.1.3233.6325). The core-shell nanoparticles with a core of calcium carbonate of the present disclosure are suitable for this application.

**Absorbent of perspiration**

Cosmetic Grade Precipitated Calcium Carbonate (PCC) is used as a filler in many cosmetic products and as an absorbent for perspiration and excess skin oils in powdered form. Typical color cosmetic products containing PCC are eye shadows, body powders, blushers, face powders, foundations and make-up bases (see for example Brenntag Specialties, issued 7/18 revised 1/20, found on https://www.brenntag.com/en-us/industries/personal-care/browse-specialty-products/bsi-precipitated-cal-carb/ - retrieved in December 2020). The core-shell nanoparticles with a core of calcium carbonate of the present disclosure are suitable for these applications.

**Substitute for colloidal plastic in scrubbing agent**

A communication dated December 13, 2016, found on https://cosmeticsbusiness.com/news/article page/The perfect scrub needs no microplasti cs/123699 (retrieved in December 2020), indicates that natural calcium carbonates are the ideal alternative to polyethylene beads in cosmetics and toiletries. The core-shell nanoparticles with a core of calcium carbonate of the present disclosure are suitable for these applications.

**Test and determination methods**

Solubility test A

For its part, the solubility is measured according to the solubility test A, which comprises the following method:

1) taking a weight of test sample ($w_{test\ sample}$) of approximately 5.0 g of polyphenol, this weight being expressed as dry weight;
2) dispersing this weight in 200 ml of said one or more polar solvents at 22° C in an Erlenmeyer flask, which is subsequently placed at 22°C in a water bath for 4 hours under magnetic stirring with stirring for 5 minutes every 30 minutes;
3) filtering the contents of the flask through a filter with a porosity of 8 $\mu$m, for example of Whatman® 2 V type;
4) pipetting 50 ml of filtrate and introducing this amount into a dry and tared crystallizing dish; evaporating said one or more polar solvents from the crystallizing dish by heating at 60° C for 45 minutes and then at 130° C for 90 minutes;
5) after cooling in a desiccator, weighing the weight of polyphenol obtained after drying ($w_{solids}$ extract).

The solubility is calculated in the following way:

$$\text{Solubility}= [w_{solids\ extract} \times 200 \times 100]/[50 \times w_{test\ sample}]$$

X-Ray diffraction (XRD)

The XRD measurements were performed on an XRD X'Pert Pro in reflection mode with a Cu K_alpha tube mounted (45kV, 40mA). The primary optics contained a programmable divergence slit whereas the secondary optics consisted of a PIXcel detector run in 1D mode with a programmable antiscatter slit. Before measuring the sample, the nanoparticles-containing solution was pipetted on a zero background holder and covered with a thin Kapton film to prevent the solvent from evaporating. During the measurement, the zero background holder was spun.

Scanning Electron Microscopy (SEM)

SEM images were obtained using Focus Ion Beam (FIB) scanning electronic microscope (model: Helios Nanolab 650), operating at a voltage of 2-30 Kv and current of 13 to 100 pA. The samples are prepared as followed: a drop of solution is deposited on copper tape and left to dry. The samples must be analysed right after drying, to avoid contamination by air moisture. Ideally, the calcium carbonate core dispersed in EtOH can be prepared in a room with controlled air moisture. Measurements were done in both feel free mode and immersion mode. SEM images were analysed using ImageJ software.

Dynamic Light Scattering (DLS)

The mean size and the polydispersity index PDI) of the nanoparticles were measured using a Malvern Zetasizer Nano-ZS90 instrument (UK). Samples were not diluted before analysis. The Refractive index of polystyrene (1.58654 at 632.8 nm) was used as an internal standard value. Measurements were done with a disposable PS (polystyrene) microcuvette at 25 °C with 120 seconds equilibration time. The dispersants water or EtOH were used according to the sample dispersant. To confirm the reproducibility, three measurements were carried out in each sample. A new cuvette was used for each sample. DLS measures the hydrodynamic diameter of the particles in the given solvent and the conditions of measurement. Therefore, the size obtained by DLS is usually bigger than the size obtained by using the scanning electron microscope, which measures the actual size of the nanoparticles after drying.

Differential Scanning Calorimetry (DSC)

Glass transition temperature ($T_g$) of the lignin samples was determined using a DSC instrument (Woodland, CA/USA) under a nitrogen atmosphere. Before analysis, the lignin was dried overnight under vacuum at 60°C. During each measurement, approximately 10 mg of dry lignin was used. The samples were heated from room temperature to 120°C at a heating rate of 10°C/min (first measurement cycle), isothermal for 5 minutes, cooled to 0°C at a cooling rate of 10°C/min, isothermal for 5 minutes, then reheated to 200 °C at a heating rate of 10 °C/min (second measurement cycle). $T_g$ was measured from the second measurement cycle. $T_g$ is defined as one-half the change in heat capacity occurring over the transition of the second heating run.

Gel permeation chromatography (GPC)

Gel permeation chromatography (GPC) is a type of size exclusion chromatography (SEC), where a sample is separated into its constituent parts based on their molecular sizes. This is accomplished by dissolving the sample in a mobile phase (solvent) and passing it through a porous column packing. The dried sample of polyphenol was dissolved in a dimethylformamide (DMF)/LiBr (0.01 M) mixture to a concentration of 0.5 mg/ml. The measurement was performed on a PL-GPC 50 Plus, Integrated GPC System from Polymer Laboratories (A Varian Inc. Company) equipped with a detection system consisting of a refractive index (RI) and Ultraviolet (UV) detector. The UV measurement was performed at a wavelength of 280 nm, which is generally associated with lignin. The system was equipped with two Agilent PolarGel-M (300×7.5mm) columns. The mobile phase was a DMF/LiBr (0.01 M) mixture; the sample was injected via a PL-AS RT GPC Autosampler at a flow rate of 0.5 ml/min. The sample was analysed using the software Cirrus GPC Version 3.2. P. All the results obtained were baseline corrected.

UV-monitored OH-group titration

The determination of the apparent pK0 values for the lignin was done in accordance with the study of Norgren M., et al. entitled "Dissociation of phenolic groups in Kraft lignin at elevated temperatures" (Holzforschung, 2000, 54, 5, 519-527). Said determination has been performed at room temperature, namely at a temperature comprised between 20°C and 30°C, for example at about 25°C.

Scanning Transmission Electron Microscopy (STEM)

High-resolution Scanning Transmission Electron Microscopy (STEM) images of the core-shell nanoparticles were recorded with Helios Nanolab 650 microscope (FEI, Eindhoven, Netherlands), at an acceleration voltage of 30 kV and a current of 50 mA. STEM analyses were performed in bright field mode. The sample preparation consisted of the deposition of a solution droplet on carbon film-coated. The transmission electron microscopy copper grids were dried before analysis. STEM allows the visualisation of the core-shell structure, not visible by classic SEM imaging.

Nuclear Magnetic Resonance (NMR)

$^{31}$P liquid NMR is used to quantify the OH groups of lignin, after a derivatization reaction functionalising the hydroxyl functional groups of lignin by phosphite groups, which are resolvable by $^{31}$P NMR. This technique is the most accurate compared to other NMR techniques for the quantification and identification of OH groups in lignin. For sample preparation, 30 mg lignin were dissolved in 700 mL of a solvent mix chloroform D/Pyridine 1:1.6 (v/v), with 100 $\mu$L relaxation agent chromium (III) acetylacetonate 14 $\mu$mol/L, 100$\mu$L internal standard endo-*N*-hydroxy-5-norbornene-2,3-dicarboxylic acid imide 108 $\mu$mol/L, and 100 $\mu$L of pure 2-chloro-4,4,5,5-tetramethyl-1,2,3-dioxapholane as phosphorylation agent. The samples were put in a liquid NMR tube and analysed the same day. NMR spectra were recorded at 300K on a Bruker Avance III HD 600 MHz spectrometer equipped with a 5 mm multinuclear BBO probe. $^{31}$P spectra were acquired with power gated $^1$H-decoupling using a 30° excitation pulse. A relaxation delay of 10s was used to record 128 transients of 128k data points each, using a sweep of 395.76 ppm centred on 100 ppm. The data was zero-filled once and multiplied with a 1Hz exponential window function before Fourier transform.

Micro-electrophoretic light scattering technology

Micro-electrophoretic light scattering technology allows determining the $\zeta$-potential. The $\zeta$-potential of a nanoparticles in suspension or in solution represents the electric charge coming from ions surrounding the particles in solution. The $\zeta$-potential represents the intensity of the electrostatic or electrical repulsion / attraction between particles. It is one of the fundamental parameters known to affect stability. The $\zeta$-potential properties were investigated in deionized water for lignin-coated calcium carbonate nanoparticles) and in EtOH for amorphous calcium carbonate nanoparticles. These measurements have been made without performing any filtration nor size-exclusion nor dilution before analysis. $\zeta$-potential has been measured by using Malvern Nano Zetasizer®. In deionized water, at a pH value of 6-7, in EtOH no pH value could be measured.

**Examples**

The embodiments of the present disclosure will be better understood by looking at the example below.

Amorphous calcium carbonate nanoparticles

In this example, amorphous calcium carbonate nanoparticles are formed as follows:
A solution of calcium chloride hexahydrate in ethanol is prepared. The concentration of calcium chloride hexahydrate is 4.4 g/mL. Magnetic stirring has been used to achieve the dissolving. This solution has been placed in a first container within the desiccator operated at room temperature (25°C). The first container is covered with a sealing membrane of Parafilm punctured with several small holes. The ratio S/z has been determined to be equal to 15. In the desiccator, 4 second containers with an opening of 2 cm and comprising each 10 g of solid ammonium bicarbonate have been placed around the first container. The pressure within the desiccator was decreased, reaching 20 kPa. Once this pressure is reached, the desiccator is sealed and the ethanolic suspension of calcium carbonate nanoparticles is then aged for 24 hours under reduced pressure. After centrifugation, performed at 41,000 g for 10 minutes, the supernatant is discarded and the pellet is dispersed in 10 mL of ethanol. The pellet is further centrifugated at 4,000 g for 10 minutes and the supernatant is this time recovered. The amorphous calcium carbonate nanoparticles (AAC NPs) in suspension in ethanol are then stored in a fridge at 4°C.

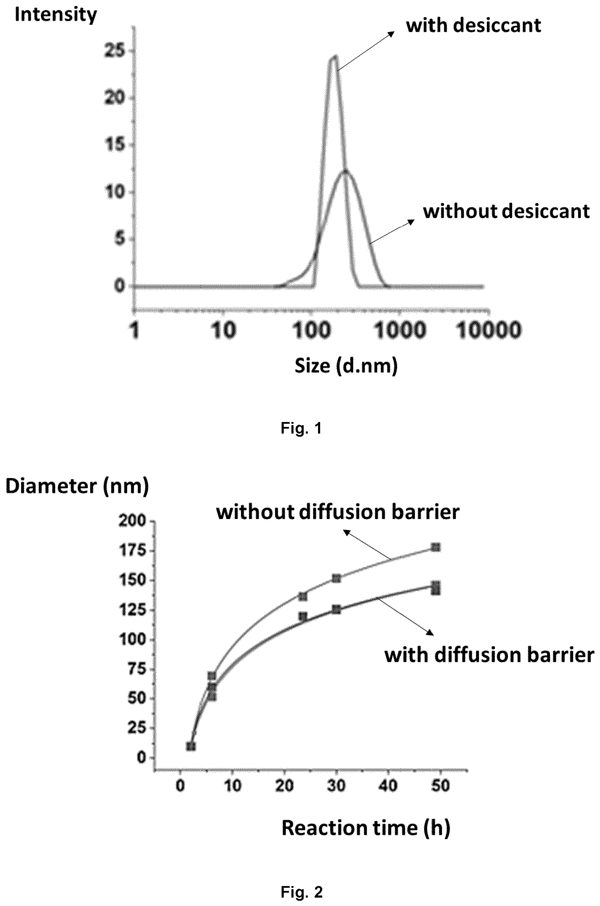

It was observed that the absence of a desiccant allows increasing the concentration of the calcium carbonate nanoparticles and narrowing the size distribution of the nanoparticles, as shown in figure 1. The size distribution measured by DLS is narrower when the desiccant is removed. Also, we visually observed a more transparent solution when the desiccant is present in the chamber, evidencing a decrease of the particle concentration when the desiccant is present in the chamber. Removing the desiccant allowed to increase the concentration of nanoparticles and obtain better control of the size.

Figure 2 shows that the incorporation of a diffusion barrier to the first container containing calcium chloride solution in EtOH leads to the obtention of calcium carbonate nanoparticles with smaller size by comparison with the case where a diffusion barrier is not set up. Visual observation and weight concentration comparison after centrifugation indicate a lower concentration by comparison with the case where a diffusion barrier is not set up. No significant change in shape and crystallinity was evidenced.

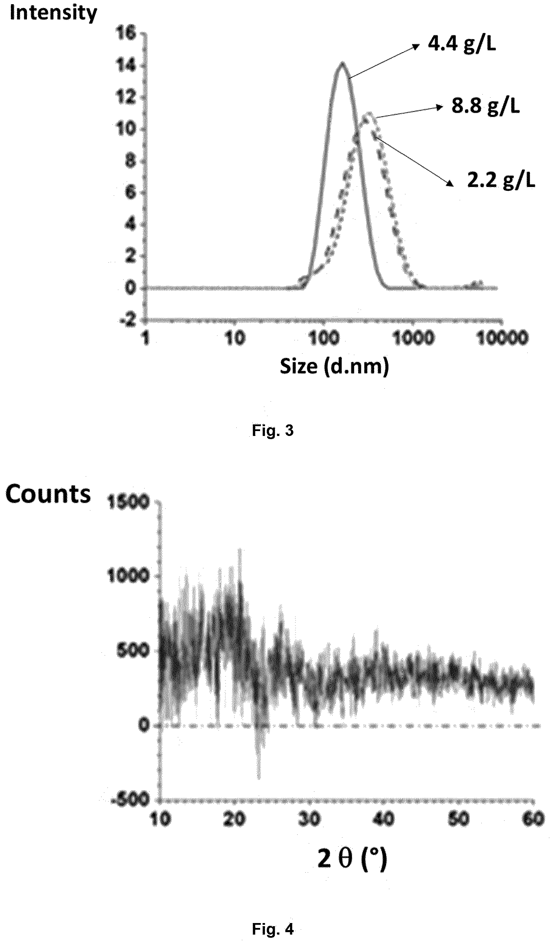

Figure 3 shows that at a concentration of 4.4 g/L, narrower size distribution and a smaller mean diameter is obtained compared to other concentrations (2.2 g/L or 8.8 g/L).

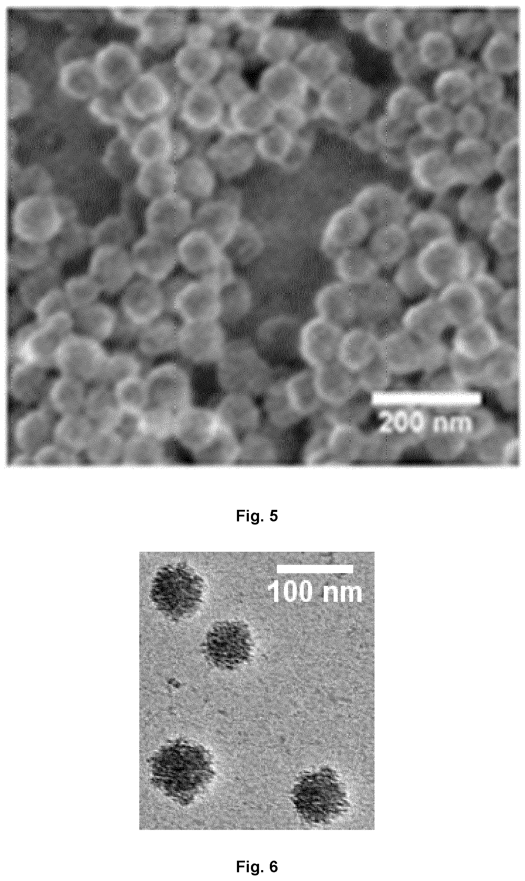

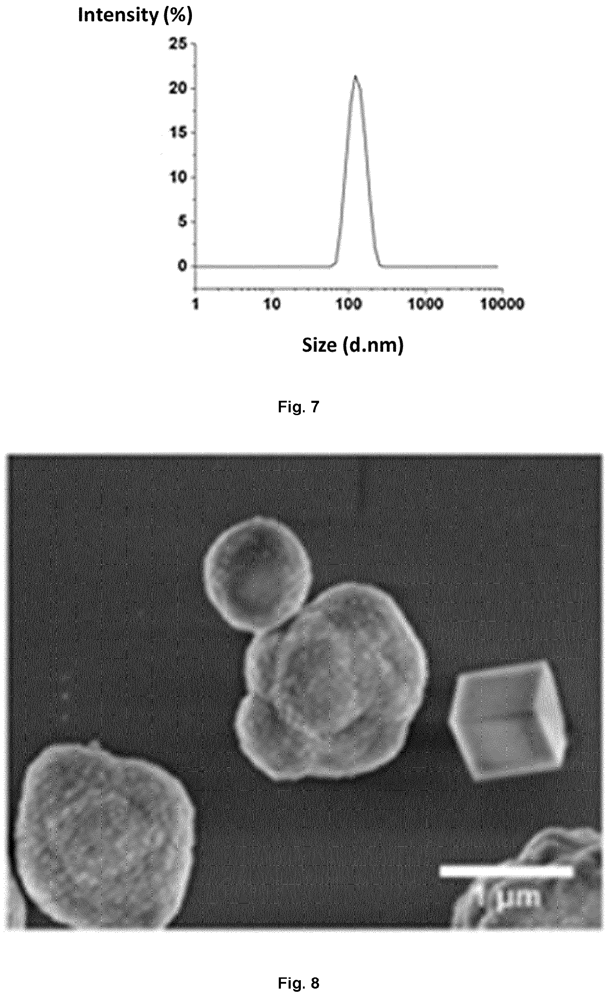

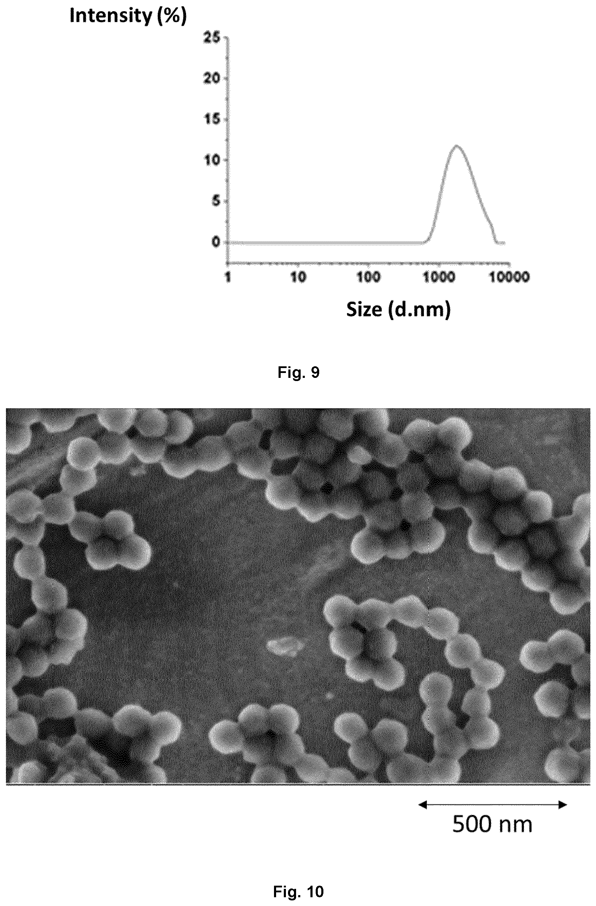

Figure 4 is an XRD spectrum of the calcium carbonate nanoparticles, evidencing that the calcium carbonate is amorphous. Figure 5 is an SEM image, showing the non-crystalline spherical calcium carbonate nanoparticles with an average diameter of 70 nm. Figure 6 is a TEM image, showing the non-crystalline spherical calcium carbonate nanoparticles. Figure 7, showing the size distribution analysis by DLS confirms that the nanoparticles are monodisperse, with a polydispersity index below 0.05. The size dispersion in DLS is centred on 127 nm, which is a higher value compared to the SEM measurement. This is due to the hydrodynamic diameter of the amorphous calcium carbonate nanoparticles dissolved in ethanol. The shape (figure 8) and the size (figure 9) of the nanoparticles have been determined in presence of water, revealing the instability of the amorphous calcium carbonate nanoparticles in an aqueous medium. Figure 8 is an SEM image that confirms the presence of large microparticles with crystalline polymorphs identifiable from their characteristic shape. Those microparticles are vaterite aggregates and trigonal rhombohedral calcite. Figure 9 indicates that the polydispersity index of the amorphous calcium carbonate particles in an aqueous medium is above 0.25 and the size dispersion is now centred on the micrometre scale.

Core-shell nanoparticles

To stabilize the amorphous calcium carbonate nanoparticles, the core of amorphous calcium carbonate has been coated with a shell of polyphenol, more particularly with a shell of lignin. In this study, three types of lignin were used:

lignin #1. Kraft lignin from Sigma-Aldrich (CAS number 8068-05-1).
lignin #2. Kraft lignin from UPM Biopiva under the form of Biopiva 100.
lignin #3. Lignin (3rd batch).

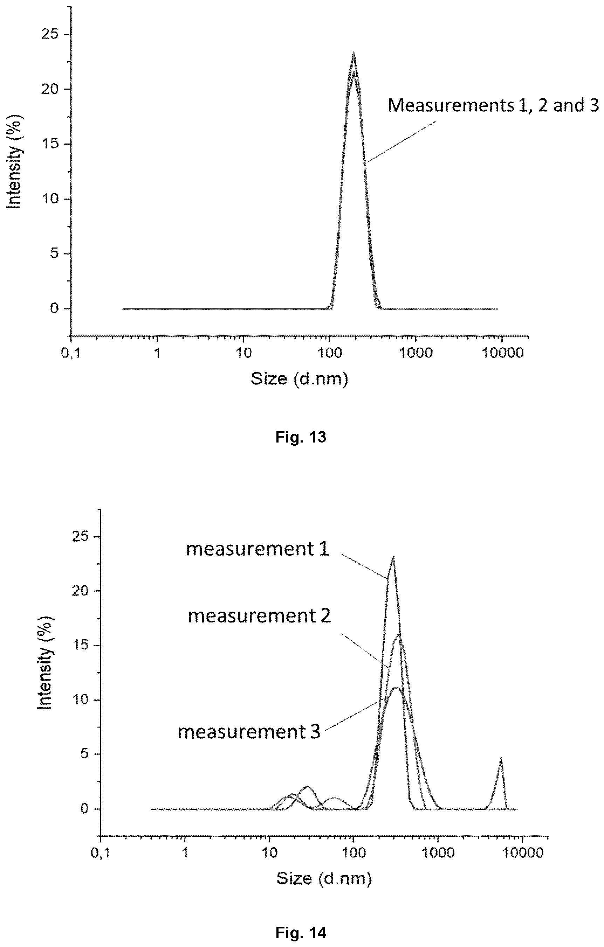

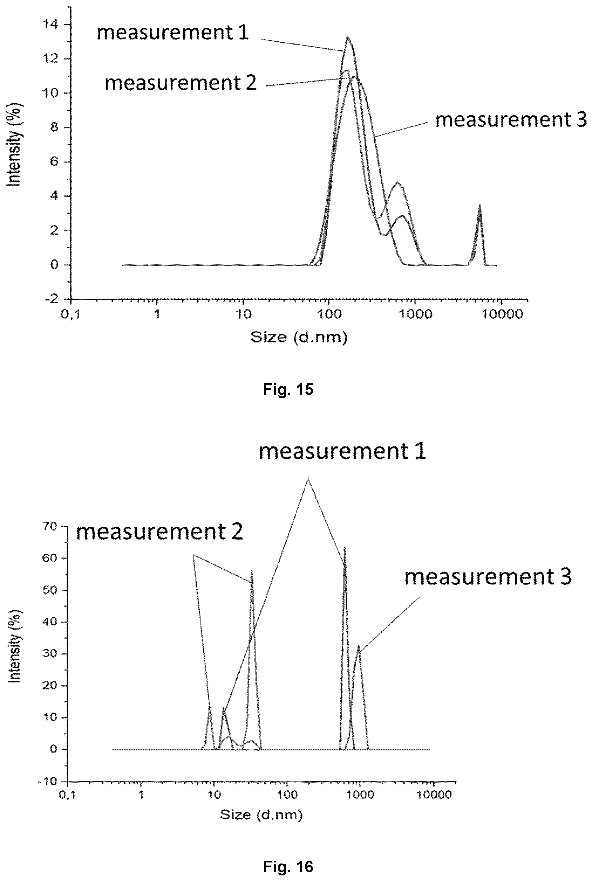

These three lignins are insoluble in water. Among those three lignins, the lignin #1 and the lignin #3, when dissolved in a solution of water and ethanol at a concentration of 10 wt.% based on the total weight of said solution, the solution has a pH of 7. However, the lignin #2, when dissolved in a solution of water and ethanol at a concentration of 10 wt.% based on the total weight of said solution, the solution has a pH that is below 5. Said lignin #2 is thus also referred to as acidic lignin.
The experiment which is described below to stabilize the calcium carbonate nanoparticles was then repeated for each of the three lignins.
To stabilize the calcium carbonate nanoparticles, a solution of lignin in ethanol at a concentration of 0.25 g/L has been prepared. Lignin is dissolved in ethanol by ultrasonic stirring, using an ultrasonic bath with 37 kHz intensity and 100% power. Amorphous calcium carbonate nanoparticles in ethanol are provided and mixed with the ethanolic solution of lignin, at a weight ratio lignin/CaCO$_3$ of 0.3.
The contact time between the lignin and the amorphous calcium carbonate is as low as 1 or 2 minutes.
The mixture is then injected with an automatic pipette with strong pipetting into ultrapure water, at a volume ratio water/mixture of 9 under stirring. The injection is followed by 15 seconds vortex. The strong pipetting comprises several aspiration cycles with the automatic pipette. The resulting aqueous solution of core-shell nanoparticles with a core of calcium carbonate and a shell of lignin is then stored in the fridge at 4°C.

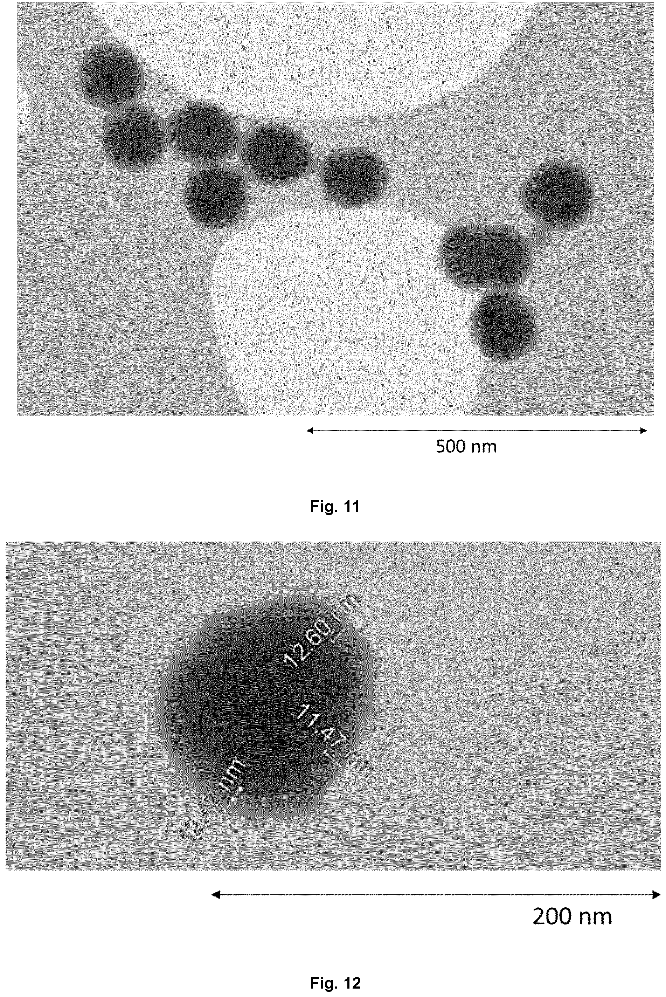

Figure 10 is an SEM image of the core-shell particles obtained when using Kraft lignin from Sigma-Aldrich. Figures 11 and 12 are STEM images of core-shell nanoparticles per the present disclosure obtained when using Kraft lignin from Sigma-Aldrich.
Among the three lignins, the lignin #1 and the lignin #3, which do generate a high acidity when dissolved in a solution of aqueous ethanol, provide efficient stability of the core-shell nanoparticles. This is notably shown by the DLS spectra for the lignin #1, which after three measurements (measurements 1, 2 and 3) taken every 30 seconds, do not change (see figure 13). Figure 14 reveals that by performing DLS studies on lignin #1 alone, the three measurements taken every 30 seconds are indicating different spectra. It can be therefore concluded that figure 13 is showing the core-shell nanoparticles with the core of calcium carbonate per the disclosure, namely stabilized by a shell of lignin #1, while the control experiments, evidenced in figure 14, do not show any formation of lignin nanoparticles.
However, using acidic lignin, namely lignin #2, DLS experiments have shown that the obtention stable core-shell nanoparticles with a core of calcium carbonate are not possible. Figure 15 shows indeed the degradation of the core-shell nanoparticles over the three measurements (measurements 1, 2 and 3) taken every 30 seconds. Figure 16 represents the control experiment showing that nanoparticles of lignin #2 were not obtained, since these DLS experiments have been achieved with only lignin #2. This is evidence that what was observed in figure 15 was the degradation of core-shell nanoparticles.

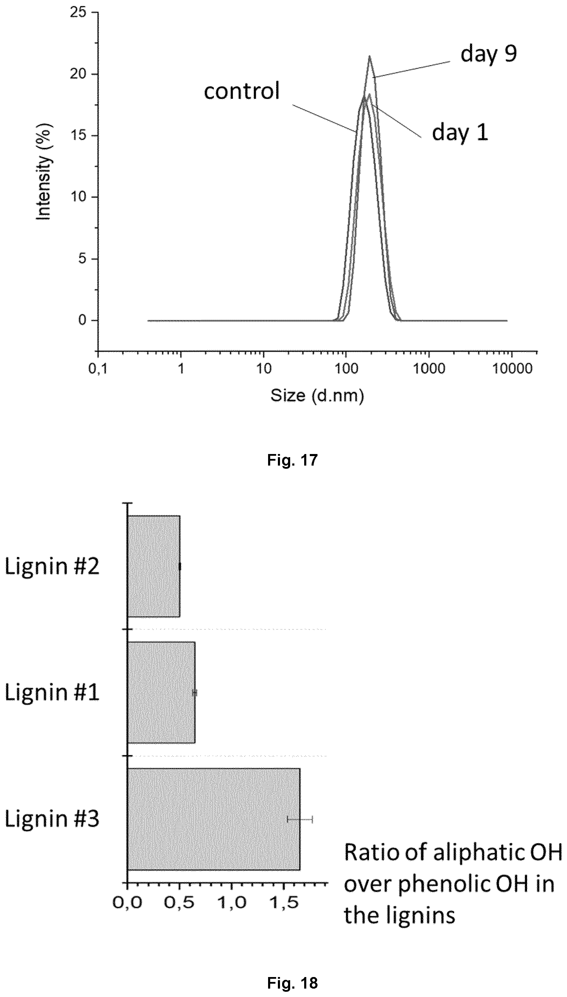

Figure 17 is the DLS spectra (two measurements were taken on day 1 and day 9) showing the stability of core-shell nanoparticles with a core of calcium carbonate and a shell of Kraft lignin from Sigma-Aldrich. The DLS data of the amorphous calcium carbonate nanoparticles in ethanol (and thus without the shell of lignin) have been inserted into the DLS spectra to show a reference.
Finally, an NMR study has been performed on the three lignins and has demonstrated that the stabilization of the core-shell nanoparticles thanks to a shell of lignin does not seem to be dependent on the hydroxylation rate of the lignin. Figure 18 shows indeed the ratio between the aliphatic OH group and the phenolic OH groups of the lignin as determined by $^{31}$P NMR and reveals that this ratio is similar for lignin #1 and lignin #2 (about 0.5) while this ratio is superior to 1.5 for lignin #3, although that both lignin #1 and lignin # 3 stabilize the core-shell nanoparticles of the present disclosure while lignin #2 is acidic and does not stabilize said nanoparticles.

**Claims**

1. Core-shell nanoparticle, the nanoparticle comprising a core being one or more selected from vaterite, proto-vaterite, and amorphous calcium carbonate as determined by X-Ray diffraction, **characterized in that** the nanoparticle further comprises a shell of polyphenol, wherein said polyphenol is selected to be insoluble in water and to show a pH ranging from 5 to 9 when measured in a solution of one or more polar solvents and water at a concentration of 10 wt.% based on the total weight of said solution and wherein said polyphenol has a solubility in said one or more polar solvents of at least 10% as determined by a solubility test A, wherein said polyphenol has a molecular weight ranging between 1000

g mol$^{-1}$ and 15000 g mol$^{-1}$ as determined by gel permeation chromatography and said core has a diameter ranging between 50 nm and 150 nm as determined by scanning transmission electron microscopy.

2. The core-shell nanoparticle according to claim 1, **characterized in that** said polyphenol is one or more lignins which when in solution in water have a concentration of at most 1 mg ml$^{-1}$, with preference, said one or more lignins are one or more Kraft lignins.

3. The core-shell nanoparticle according to claim 1 or 2, **characterized in that** said polyphenol has at least one glass-transition temperature which is ranging between 100°C and 170°C as determined by differential scanning calorimetry.

4. The core-shell nanoparticle according to any one of claims 1 to 3, **characterized in that** said polyphenol has phenol moieties, and wherein at least a part of said phenol moieties has been functionalized with one phenol protecting group; with preference, said phenol protecting group is selected from one or more of ether, silyl ether, ester, carbonate, carbamate, phosphinate and sulfonate.

5. The core-shell nanoparticle according to any one of claims 1 to 4, **characterized in that** said polyphenol has an apparent $pK_0$ ranging between 8.0 and 13.0 as determined by UV-monitored OH-group titration at room temperature.

6. The core-shell nanoparticle according to any one of claims 1 to 5, **characterized in that** said shell has a thickness ranging between 2 nm and 40 nm as determined by scanning transmission electron microscopy.

7. The core-shell nanoparticle according to any one of claims 1 to 6, **characterized in that** said nanoparticle is spherical, and/or **in that** said nanoparticle has a diameter ranging between 80 nm and 200 nm as determined by scanning electron microscopy.

8. The core-shell nanoparticle according to any one of claims 1 to 7, **characterized in that**, when dispersed in water or aqueous media, said nanoparticle is monodisperse and/or said nanoparticle has a polydispersity index ranging between 0.08 and 0.30 as determined by dynamic light scattering.

9. The core-shell nanoparticle according to any one of claims 1 to 8, **characterized in that** said nanoparticle has a surface charge having a $\zeta$-potential below 0 mV as determined by micro-electrophoretic light scattering technology.

10. Method for forming core-shell nanoparticles according to any one of claims 1 to 9, said method being **characterized in that** it comprises the following steps:

    a) providing calcium carbonate nanoparticles, to form a core selected from one or more of vaterite, proto-vaterite, and amorphous calcium carbonate as determined by X-Ray diffraction;
    b) dissolving at least one polyphenol in one or more polar solvents to form a solution of at least one polyphenol, wherein said at least one polyphenol is insoluble in water, shows a pH ranging from 5 to 9 when measured in a solution of said one or more polar solvents and water at a concentration of 10 wt.% based on the total weight of said solution, wherein said polyphenol has a solubility in said one or more polar solvents of at least 10% as determined by a solubility test A, and wherein said polyphenol has a molecular weight ranging between 1000 g mol$^{-1}$ and 15000 g mol$^{-1}$ as determined by gel permeation chromatography;
    c) mixing said calcium carbonate nanoparticles provided in step (a) with said solution of at least one polyphenol formed in step (b) to form a mixture;
    d) injecting said mixture in water to provide a solution of at least one core-shell nanoparticle as defined in any one of claims 1 to 9,

    with preference, the method further comprises the step (e) of recovering said one or more core-shell nanoparticles as defined in any one of claims 1 to 9.

11. The method according to claim 10, **characterized in that** said one or more polar solvents are one or more polar solvents miscible in water and having a boiling point inferior to 100°C under a pressure of 2 kPa; with preference, said one or more polar solvents are selected from ethanol, methanol, isopropanol, acetonitrile, acetone, tetrahydrofuran, and dimethylsulfoxide.

12. The method according to claim 10 or 11, **characterized in that** said one or more polar solvents have an amount of water which is below 5 wt.% based on the total weight of said one or more polar solvents; with preference below 0.5 wt.

%.

13. The method according to any one of claims 10 to 12, **characterized in that** the weight ratio between the at least one polyphenol and calcium carbonate of the calcium carbonate nanoparticles is ranging between 0.01 and 1.

14. Use of a polyphenol as a shell of core-shell nanoparticle having a core being one or more selected from vaterite, proto-vaterite, and amorphous calcium carbonate as determined by X-Ray diffraction, wherein said polyphenol is selected to be insoluble in water and to show a pH ranging from 5 to 9 when measured in a solution of one or more polar solvents and water at a concentration of 10 wt.% based on the total weight of said solution, wherein said polyphenol is has a solubility in said one or more polar solvents of at least 10% as determined by a solubility test A, and wherein said polyphenol has a molecular weight ranging between 1000 g mol$^{-1}$ and 15000 g mol$^{-1}$ as determined by gel permeation chromatography.

15. Use of core-shell nanoparticle according to any one of claims 1 to 9 as a buffering agent in cancer therapy, or as drug carrier, or as a contrast agent, or as a template for hollow nanoparticles, or as a whitening agent, or as an absorbent of perspiration, or as an absorbent of moisture, or as a substitute of colloidal plastic in scrubbing agent.

## Patentansprüche

1. Kern-Schale-Nanopartikel, wobei der Nanopartikel einen Kern umfasst, der ein oder mehrere Elemente umfasst, die aus Vaterit, Proto-Vaterit und amorphem Calciumcarbonat ausgewählt sind, wie sie durch Röntgenbeugung bestimmt werden, **dadurch gekennzeichnet, dass** der Nanopartikel ferner eine Polyphenolschale umfasst; wobei das oben genannte Polyphenol so ausgewählt ist, dass es in Wasser unlöslich ist und einen pH-Wert in dem Bereich von 5 bis 9 aufweist, wenn die Messung in einer Lösung aus einem oder mehreren polaren Lösungsmitteln und Wasser in einer Konzentration von 10 Gew.-%, bezogen auf das Gesamtgewicht der oben genannten Lösung, durchgeführt wird; und wobei das oben genannte Polyphenol eine durch einen Löslichkeitstest A bestimmte Löslichkeit in dem einen oder mehreren oben genannten polaren Lösungsmitteln von mindestens 10 % aufweist; wobei das oben genannte Polyphenol ein durch Gelpermeationschromatographie bestimmtes Molekulargewicht aufweist, das in einem Bereich von 1000 g mol$^{-1}$ bis 15000 g mol$^{-1}$ liegt, und der oben genannte Kern einen durch Raster- und Transmissionselektronenmikroskopie bestimmten Durchmesser aufweist, der in einem Bereich zwischen 50 nm und 150 nm liegt.

2. Kern-Schale-Nanopartikel nach Anspruch 1, **dadurch gekennzeichnet, dass** das oben genannte Polyphenol ein oder mehrere Lignine darstellt, die eine Konzentration von höchstens 1 mg ml$^{-1}$ aufweisen, wenn sie sich in Lösung in Wasser vorliegen; wobei vorzugsweise das eine oder die mehreren oben genannten Lignine ein oder mehrere Thiolignine darstellen.

3. Kern-Schale-Nanopartikel nach Anspruch 1 oder 2, **dadurch gekennzeichnet, dass** das oben genannte Polyphenol mindestens eine durch Differential-Scanning-Kalorimetrie bestimmte Glasübergangstemperatur aufweist, die in einem Bereich zwischen 100 °C und 170 °C liegt.

4. Kern-Schale-Nanopartikel nach einem der Ansprüche 1 bis 3, **dadurch gekennzeichnet, dass** das oben genannte Polyphenol Phenolfraktionen aufweist; und wobei mindestens ein Teil der oben genannten Phenolfraktionen mit einer Schutzgruppe der Phenolgruppe funktionalisiert wurde; wobei vorzugsweise die oben genannte Schutzgruppe der Phenolgruppe aus einem oder mehreren Elementen ausgewählt ist, nämlich Ether, Silyläther, Ester, Carbonat, Carbamat, Phosphinat und Sulfonat.

5. Kern-Schale-Nanopartikel nach einem der Ansprüche 1 bis 4, **dadurch gekennzeichnet, dass** das oben genannte Polyphenol eine scheinbare durch Titration der OH-Gruppe im Rahmen einer UV-Spektroskopie bei Raumtemperatur bestimmte Dissoziationskonstante pK$_0$ aufweist, die in einem Bereich zwischen 8,0 und 13,0 liegt.

6. Kern-Schale-Nanopartikel nach einem der Ansprüche 1 bis 5, **dadurch gekennzeichnet, dass** die oben genannte Schale eine durch Raster- und Transmissionselektronenmikroskopie bestimmte Dicke aufweist, die in einem Bereich zwischen 2 nm und 40 nm liegt.

7. Kern-Schale-Nanopartikel nach einem der Ansprüche 1 bis 6, **dadurch gekennzeichnet, dass** der oben genannte Nanopartikel eine kugelförmige Form aufweist, und/oder dass der oben genannte Nanopartikel einen durch Rasterelektronenmikroskopie bestimmten Durchmesser aufweist, der in einem Bereich zwischen 80 nm und 200 nm liegt.

8. Kern-Schale-Nanopartikel nach einem der Ansprüche 1 bis 7, **dadurch gekennzeichnet, dass**, wenn er in einem wässrigen Medium oder in Wasser dispergiert vorliegt, der oben genannte Nanopartikel monodispers ist und/oder der oben genannte Nanopartikel einen durch dynamische Lichtstreuung bestimmten Polydispersitätsindex aufweist, der in einem Bereich zwischen 0,08 und 0,30 liegt.

9. Kern-Schale-Nanopartikel nach einem der Ansprüche 1 bis 8, **dadurch gekennzeichnet, dass** der oben genannte Nanopartikel eine Oberflächenladung aufweist, die ein durch eine mikroelektrophoretische Lichtstreuungstechnik bestimmtes Zeta-Potential kleiner als 0 mV aufweist.

10. Verfahren zur Bildung von Kern-Schale-Nanopartikeln gemäß einem der Ansprüche 1 bis 9, wobei das oben genannte Verfahren **dadurch gekennzeichnet ist, dass** es die folgenden Schritte umfasst:

   a) das Bereitstellen von Calciumcarbonat-Nanopartikeln, um einen Kern zu erzielen, der aus einem oder mehreren Elementen ausgewählt ist, die aus Vaterit, Proto-Vaterit und amorphem Calciumcarbonat ausgewählt sind, wie sie durch Röntgenbeugung bestimmt werden;
   b) das Lösen mindestens eines Polyphenols in einem oder mehreren polaren Lösungsmitteln, um eine Lösung aus mindestens einem Polyphenol zu erzielen; wobei das oben genannte mindestens eine Polyphenol in Wasser unlöslich ist, einen pH-Wert aufweist, der in dem Bereich von 5 bis 9 liegt, wenn es in einer Lösung aus dem einen oder den mehreren oben genannten polaren Lösungsmitteln und Wasser in einer Konzentration von 10 Gew.-%, bezogen auf das Gesamtgewicht der oben genannten Lösung, gemessen wird; wobei das oben genannte Polyphenol eine durch einen Löslichkeitstest A bestimmte Löslichkeit in dem einen oder den mehreren oben genannten polaren Lösungsmitteln von mindestens 10 % aufweist, und wobei das oben genannte Polyphenol ein durch Gelpermeationschromatographie bestimmtes Molekulargewicht aufweist, das im Bereich zwischen 1000 g mol$^{-1}$ und 1500 g mol$^{-1}$ liegt;
   c) das Mischen der in Schritt (a) oben genannten bereitgestellten Calciumcarbonat-Nanopartikel mit der in Schritt (b) oben genannten erzielten Lösung aus mindestens einem Polyphenol, um ein Gemisch zu erzielen;
   d) das Injizieren des oben genannten Gemisches in Wasser, um eine Lösung von mindestens einem Kern-Schale-Nanopartikel, wie sie in einem der Ansprüche 1 bis 9 definiert ist, bereitzustellen;

   wobei vorzugsweise das Verfahren ferner den Schritt (e) umfasst, wobei die eine oder mehreren oben genannten Kern-Schale-Nanopartikel, wie sie in einem der Ansprüche 1 bis 9 definiert sind, zurückgewonnen werden.

11. Verfahren nach Anspruch 10, **dadurch gekennzeichnet, dass** das eine oder die mehreren oben genannten polaren Lösungsmittel ein oder mehrere polare Lösungsmittel darstellen, die mit Wasser mischbar sind und einen Siedepunkt aufweisen, der unter einem Druck von 2 kPa unter 100 °C liegt; wobei vorzugsweise das eine oder die mehreren oben genannten polaren Lösungsmittel aus Ethanol, Methanol, Isopropanol, Acetonitril, Aceton, Tetrahydrofuran und Dimethylsulfoxid ausgewählt sind.

12. Verfahren nach Anspruch 10 oder 11, **dadurch gekennzeichnet, dass** das eine oder die mehreren oben genannten polaren Lösungsmittel einen Wassergehalt von weniger als 5 Gew.-%, bezogen auf das Gesamtgewicht des einen oder der mehreren oben genannten polaren Lösungsmittel, vorzugsweise weniger als 0,5 Gew.-%, aufweisen.

13. Verfahren nach einem der Ansprüche 10 bis 12, **dadurch gekennzeichnet, dass** das Gewichtsverhältnis zwischen dem mindestens einen oben genannten Polyphenol und dem Calciumcarbonat der Calciumcarbonat-Nanopartikel in dem Bereich zwischen 0,01 und 1 liegt.

14. Verwendung eines Polyphenols in Form einer Schale eines Kern-Schale-Nanopartikels, der einen Kern aufweist, der ein oder mehrere Elemente darstellt, die aus Vaterit, Proto-Vaterit und amorphem Calciumcarbonat ausgewählt sind, wie sie durch Röntgenbeugung bestimmt werden; wobei das oben genannte Polyphenol derart ausgewählt ist, dass es in Wasser unlöslich ist und einen pH-Wert im Bereich von 5 bis 9 aufweist, wenn die Messung in einer Lösung aus einem oder mehreren polaren Lösungsmitteln und Wasser in einer Konzentration von 10 Gew.-%, bezogen auf das Gesamtgewicht der oben genannten Lösung, durchgeführt wird; wobei das oben genannte Polyphenol eine durch einen Löslichkeitstest A bestimmte Löslichkeit in dem einen oder den mehreren polaren oben genannten Lösungsmitteln von mindestens 10 % aufweist, und wobei das oben genannte Polyphenol ein durch Gelpermeationschromatographie bestimmtes Molekulargewicht aufweist, das in dem Bereich zwischen 1000 g mol-1 und 1500 g mol-1 liegt.

15. Verwendung von Kern-Schale-Nanopartikeln gemäß einem der Ansprüche 1 bis 9 in Form eines Puffermittels in der Krebstherapie oder in Form eines Arzneimittelträgers oder in Form eines Kontrastmittels oder in Form einer Matrix für hohle Nanopartikel, oder in Form eines Bleichmittels, oder in Form eines schweißabsorbierenden Mittels, oder in Form eines feuchtigkeitsabsorbierenden Mittels, oder in Form eines kolloidalen Kunststoffersatzes in einem Scheuermittel.

**Revendications**

1. Nanoparticule cœur-écorce, dans laquelle la nanoparticule comprend un cœur qui représente un ou plusieurs éléments choisis parmi la vatérite, la proto-vatérite et du carbonate de calcium amorphe, comme déterminé par l'intermédiaire d'une diffraction des rayons X, **caractérisée en ce que** la nanoparticule comprend en outre une écorce de polyphénol ; dans laquelle le polyphénol en question est choisi pour être insoluble dans l'eau et pour présenter un pH qui se situe dans la plage allant de 5 à 9, lorsqu'on le mesure dans une solution d'un ou de plusieurs solvants polaires et d'eau à une concentration de 10 % en poids, en se basant sur le poids total de ladite solution ; et dans laquelle ledit polyphénol possède une solubilité dans lesdits un ou plusieurs solvants polaires qui s'élève à au moins 10 %, telle qu'on la détermine par l'intermédiaire d'un test de solubilité A ; dans laquelle ledit polyphénol possède un poids moléculaire qui se situe dans la plage entre 1000 g mol$^{-1}$ et 15000 g mol$^{-1}$, tel qu'on le détermine par l'intermédiaire d'une chromatographie par perméation sur gel, et ledit cœur possède un diamètre qui se situe dans la plage entre 50 nm et 150 nm, tel qu'on le détermine par l'intermédiaire d'une microscopie électronique à balayage et en transmission.

2. Nanoparticule cœur-écorce selon la revendication 1, **caractérisée en ce que** ledit polyphénol représente une ou plusieurs lignines qui, lorsqu'elles se trouvent en solution dans de l'eau, possèdent une concentration qui s'élève au maximum à 1 mg ml$^{-1}$ ; de préférence, dans laquelle lesdites une ou plusieurs lignines représentent une ou plusieurs thiolignines.

3. Nanoparticule cœur-écorce selon la revendication 1 ou 2, **caractérisée en ce que** ledit polyphénol possède au moins une température de transition vitreuse qui se situe dans la plage entre 100 °C et 170 °C, telle qu'on la détermine par l'intermédiaire d'une calorimétrie différentielle à balayage.

4. Nanoparticule cœur-écorce selon l'une quelconque des revendications 1 à 3, **caractérisée en ce que** ledit polyphénol possède des fractions de phénol ; et dans laquelle au moins une partie desdites fractions de phénol ont été fonctionnalisées avec un groupe de protection du groupe phénol ; de préférence, dans laquelle ledit groupe de protection du groupe phénol est choisi parmi un ou plusieurs éléments, à savoir de l'éther, de l'éther de silyle, un ester, un carbonate, un carbamate, un phosphinate et un sulfonate.

5. Nanoparticule cœur-écorce selon l'une quelconque des revendications 1 à 4, **caractérisée en ce que** ledit polyphénol possède une constante de dissociation apparente $pK_0$ qui se situe dans la plage entre 8,0 et 13,0, telle qu'on la détermine par l'intermédiaire d'une titration du groupe OH dans le cadre d'une spectroscopie UV à la température ambiante.

6. Nanoparticule cœur-écorce selon l'une quelconque des revendications 1 à 5, **caractérisée en ce que** ladite écorce possède une épaisseur qui se situe dans la plage entre 2 nm et 40 nm, telle qu'on la détermine par l'intermédiaire d'une microscopie électronique à balayage et en transmission.

7. Nanoparticule cœur-écorce selon l'une quelconque des revendications 1 à 6, **caractérisée en ce que** ladite nanoparticule est de forme sphérique et/ou **en ce que** ladite nanoparticule possède un diamètre qui se situe dans la plage entre 80 nm et 200 nm, tel qu'on le détermine par l'intermédiaire d'une microscopie électronique à balayage.

8. Nanoparticule cœur-écorce selon l'une quelconque des revendications 1 à 7, **caractérisée en ce que**, lorsqu'elle se trouve à l'état dispersé dans de l'eau ou dans un milieu aqueux, ladite nanoparticule est monodispersée et/ou ladite nanoparticule possède un indice de polydispersité qui se situe dans la plage entre 0,08 et 0,30, tel qu'on le détermine par l'intermédiaire d'une diffusion dynamique de la lumière.

9. Nanoparticule cœur-écorce selon l'une quelconque des revendications 1 à 8, **caractérisée en ce que** ladite nanoparticule possède une charge superficielle qui présente un potentiel zêta inférieur à 0 mV, tel qu'on le détermine par l'intermédiaire d'une technologie de diffusion de lumière micro-électrophorétique.

**10.** Procédé destiné à la formation de nanoparticules de type cœur-écorce, en conformité avec l'une quelconque des revendications 1 à 9, dans lequel ledit procédé est **caractérisé en ce qu'**il comprend les étapes suivantes au cours desquelles :

a) on procure des nanoparticules à base de carbonate de calcium, afin d'obtenir un cœur qui est choisi parmi un ou plusieurs éléments, à savoir la vatérite, la proto-vatérite et du carbonate de calcium amorphe, comme déterminé par l'intermédiaire d'une diffraction des rayons X ;

b) on dissout au moins un polyphénol dans un ou plusieurs solvants polaires afin d'obtenir une solution d'au moins un polyphénol ; dans lequel ledit au moins un polyphénol est insoluble dans l'eau, présente un pH qui se situe dans la plage allant de 5 à 9, lorsqu'on le mesure dans une solution desdits un ou plusieurs solvants polaires et d'eau à une concentration de 10 % en poids, lorsqu'on se base sur le poids total de ladite solution ; dans lequel ledit polyphénol possède une solubilité dans lesdits un ou plusieurs solvants polaires qui s'élève à au moins 10 %, telle qu'on la détermine par l'intermédiaire d'un test de solubilité A ; et dans lequel le polyphénol en question possède un poids moléculaire qui se situe dans la plage entre 1000 g mol$^{-1}$ et 15000 g mol$^{-1}$, tel qu'on le détermine par l'intermédiaire d'une chromatographie par perméation sur gel ;

c) on mélange lesdites nanoparticules à base de carbonate de calcium que l'on a obtenues à l'étape (a) avec ladite solution d'au moins un polyphénol que l'on a obtenue à l'étape (b) afin d'obtenir un mélange ;

d) on injecte ledit mélange dans de l'eau afin d'obtenir une solution d'au moins une nanoparticule de type cœur-écorce, telle qu'elle est définie dans l'une quelconque des revendications 1 à 9 ;

de préférence, dans lequel le procédé comprend en outre l'étape (e) au cours de laquelle on récupère lesdites une ou plusieurs nanoparticules cœur-écorce, telles qu'elles sont définies dans l'une quelconque des revendications 1 à 9.

**11.** Procédé selon la revendication 10, **caractérisé en ce que** lesdits un ou plusieurs solvants polaires représentent un ou plusieurs solvants polaires qui sont miscibles à l'eau et qui possèdent un point d'ébullition qui est inférieur à 100 °C sous une pression de 2 kPa ; de préférence, dans lequel lesdits un ou plusieurs solvants polaires sont choisis parmi l'éthanol, le méthanol, l'isopropanol, l'acétonitrile, l'acétone, le tétrahydrofuranne et le diméthylsulfoxyde.

**12.** Procédé selon la revendication 10 ou 11, **caractérisé en ce que** lesdits un ou plusieurs solvants polaires possèdent une quantité d'eau qui est inférieure à 5 % en poids, lorsqu'on se base sur le poids total desdits un ou plusieurs solvants polaires, de préférence inférieure à 0,5 % en poids.

**13.** Procédé selon l'une quelconque des revendications 10 à 12, **caractérisé en ce que** le rapport pondéral entre ledit au moins un polyphénol et le carbonate de calcium des nanoparticules à base de carbonate de calcium se situe dans la plage entre 0,01 et 1.

**14.** Utilisation d'un polyphénol sous la forme d'une écorce d'une nanoparticule cœur-écorce, qui possède un cœur qui représente un ou plusieurs éléments choisis parmi la vatérite, la proto-vatérite et du carbonate de calcium amorphe, comme déterminé par l'intermédiaire d'une diffraction des rayons X; dans laquelle le polyphénol en question est choisi pour être insoluble dans l'eau et pour présenter un pH qui se situe dans la plage allant de 5 à 9, lorsqu'on le mesure dans une solution d'un ou de plusieurs solvants polaires et d'eau à une concentration de 10 % en poids, lorsqu'on se base sur le poids total de ladite solution ; dans laquelle ledit polyphénol possède une solubilité dans lesdits un ou plusieurs solvants polaires qui s'élève à au moins 10 %, telle qu'on la détermine par l'intermédiaire d'un test de solubilité A, et dans laquelle ledit polyphénol possède un poids moléculaire qui se situe dans la plage entre 1000 g mol$^{-1}$ et 15000 g mol$^{-1}$, tel qu'on le détermine par l'intermédiaire d'une chromatographie par perméation sur gel.

**15.** Utilisation d'une nanoparticule cœur-écorce en conformité avec l'une quelconque des revendications 1 à 9, sous la forme d'un agent tampon dans la thérapie du cancer, ou sous la forme d'un support de médicament, ou sous la forme d'un produit de contraste, ou sous la forme d'une matrice pour des nanoparticules creuses, ou sous la forme d'un agent de blanchiment, ou sous la forme d'un agent qui absorbe la sueur, ou sous la forme d'un agent qui absorbe l'humidité, ou encore sous la forme d'un substitut d'une matière plastique colloïdale dans une substance de récurage.

Fig. 1

Fig. 2

Fig. 3

Fig. 4

Fig. 5

Fig. 6

Fig. 7

Fig. 8

Fig. 9

500 nm

Fig. 10

500 nm

Fig. 11

200 nm

Fig. 12

Fig. 13

Fig. 14

Fig. 15

Fig. 16

Fig. 17

Fig. 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 106752100
- WO 2021116041 A

### Non-patent literature cited in the description

- **BOURY F. et al.** Synthesis and characterization of CaCO3 - Biopolymer hybrid nanoporous microparticles for controlled release of doxorubicin. *Colloids and surfaces B: Biointerfaces*, 2014, vol. 123, 158-169
- **XU C. et al.** Biodegradable Nanoparticles of Polyacrylic Acid (PAA)-Stabilized Amorphous CaCO3 for Tunable pH-Responsive Drug Delivery and Enhanced Tumor Inhibition. *Adv. Funct. Mater.*, 2019, 1808146
- **BALA H. et al.** Preparation and characteristics of calcium carbonate/silica nanoparticles with core-shell structure. *Colloids and Surfaces A: Physiochem. Eng. Aspects*, 2007, vol. 294, 8-13
- Protection for phenols and catechols. Wiley online library, 11 August 2014
- **CHEN S-F. et al.** Ethanol assisted synthesis of pure and stable amorphous calcium carbonate nanoparticles. *Chem. Comm.*, 2013, vol. 49, 9564-9566
- **SOM A. et al.** *Nanoscale*, 2016, vol. 8, 12639-12674
- **A. SOM et al.** Monodispersed calcium carbonate nanoparticles modulate local pH and inhibit tumor growth in vivo. *Nanoscale*, 2016, vol. 8, 12639-12647
- **MIN K. H. et al.** pH-Controlled Gas-Generating Mineralized Nanoparticles: A Theranostic Agent for Ultrasound Imaging and Therapy of Cancers. *ACS Nano*, 2015, vol. 9, 134-145
- **HASSAS B. V. et al.** *Substitution of TiO2 with precipitated calcium carbonate in waterborne paints*
- *Brenntag Specialties*, December 2020, https://www.brenntag.com/en-us/industries/personal-care/browse-specialty-products/bsi-precipitated-cal-carb/
- **NORGREN M. et al.** Dissociation of phenolic groups in Kraft lignin at elevated temperatures. *Holzforschung*, 2000, vol. 54 (5), 519-527
- *CHEMICAL ABSTRACTS*, 8068-05-1